# EUROPÄISCHE PATENTSCHRIFT

(11) **EP 3 451 890 B1**
(45) Veröffentlichungstag und Bekanntmachung des Hinweises auf die Patenterteilung: **22.03.2023**
(21) Anmeldenummer: 16722134.0
(22) Anmeldetag: 04.05.2016
(51) Int. Cl.: A47L 11/30, A47L 11/40

(54) **BODENBEHANDLUNGSSYSTEM UND VERFAHREN ZUM BETREIBEN EINES SOLCHEN**
FLOOR TREATMENT SYSTEM AND METHOD FOR OPERATING SUCH
SYSTÈME DE TRAITEMENT DES SOLS ET PROCÉDÉ D'OPERATION D'UN TEL

(43) Veröffentlichungstag der Anmeldung: 13.03.2019
(73) Patentinhaber: Alfred Kärcher SE & Co. KG, 71364 Winnenden (DE)
(72) Erfinder: WURM, Christian, 71332 Waiblingen (DE); BLUMHARDT, Heiko, 71686 Remseck (DE); PFISTER, Barbara, 71554 Weissach im Tal (DE); WALLER, Christoph, 71409 Schwaikheim (DE); HOFNER, Christian, 73642 Welzheim (DE)
(74) Vertreter: DTS Patent- und Rechtsanwälte Schnekenbühl und Partner mbB
(86) Internationale Anmeldenummer: PCT/EP2016/060092
(87) Internationale Veröffentlichungsnummer: WO 2017/190788

(56) Entgegenhaltungen:
- EP-A1- 2 648 307

## Beschreibung

Die Erfindung betrifft ein Bodenbehandlungssystem, umfassend eine mobile Bodenbehandlungsvorrichtung und eine Andockstation für diese, wobei die Bodenbehandlungsvorrichtung eine Steuereinrichtung, mindestens eine mit dieser gekoppelte Steuerleitung und eine elektrische Energiespeichereinrichtung zur Energieversorgung der Bodenbehandlungsvorrichtung umfasst, wobei das Bodenbehandlungssystem eine Detektionseinrichtung umfasst zur Feststellung, ob die Bodenbehandlungsvorrichtung die Andockstellung einnimmt.

Außerdem betrifft die vorliegende Erfindung ein Verfahren zum Betreiben eines Bodenbehandlungssystems.

Das Bodenbehandlungssystem ist beispielsweise ein Bodenreinigungssystem, wobei die Bodenbehandlungsvorrichtung als Bodenreinigungsvorrichtung ausgestaltet ist. Diese kann mindestens ein Reinigungsaggregat zum Reinigen der Bodenfläche aufweisen, die vorzugsweise zur Steigerung der Reinigungswirkung mit einer Reinigungsflüssigkeit (üblicherweise Wasser) aus einem Vorratsbehälter beaufschlagt werden kann. Abgelöster Schmutz und Reinigungsflüssigkeit können vorzugsweise von der Bodenfläche aufgenommen und in einen Schmutzflüssigkeitsbehälter der Bodenreinigungsvorrichtung überführt werden.

Die Bodenbehandlungsvorrichtung kann selbstfahrend und selbstlenkend ausgestaltet sein, um eine autonome Behandlung der Bodenfläche zu ermöglichen. Die Bodenbehandlungsvorrichtung ist daher insbesondere ein Roboter.

Alternativ oder ergänzend kann vorgesehen sein, dass die Bodenbehandlungsvorrichtung handgeführt ist. Eine Bedienperson kann die Bodenbehandlungsvorrichtung über die Bodenfläche führen. Optional kann ein Antrieb für ein Fahrwerk vorhanden sein.

Bei einem Bodenbehandlungssystem der eingangs genannten Art ist eine Andockstation für die Bodenbehandlungsvorrichtung vorgesehen. Autonom oder unter Führung durch eine Bedienperson kann die Bodenbehandlungsvorrichtung zur Andockstation verfahren/verfahren werden und an dieser eine Andockstellung einnehmen. Dies erlaubt es, der Bodenbehandlungsvorrichtung eine verbrauchbare Komponente zuzuführen. Dabei handelt es sich zum Beispiel um elektrische Energie, die der Energiespeichereinrichtung zugeführt wird. Denkbar ist auch die Zufuhr einer Flüssigkeit, beispielsweise der vorstehend erwähnten Reinigungsflüssigkeit für den Vorratsbehälter. Nach dem Befüllen der verbrauchbaren Komponente kann die Bodenbehandlungsvorrichtung die Andockstation verlassen, und die Bodenbehandlung kann fortgesetzt werden.

Die EP 1 762 165 A2 beschreibt ein als Bodenreinigungssystem ausgestaltetes Bodenbehandlungssystem. Ein Reinigungsroboter kann in einer Befüllposition ein Funksignal an eine Basisstation übermitteln. Daraufhin fährt die Basisstation eine Befüllleitung auf, um einen Flüssigkeitsbehälter des Roboters zu befüllen. Die Basisstation weist dadurch eine hohe Komplexität auf. Als verbrauchbare Komponente kann dem Roboter ferner elektrische Energie zugeführt werden, wobei freiliegende elektrische Kontaktelemente an der Basisstation und am Roboter in einer Andockposition des Roboters eine elektrische Verbindung eingehen können. Es besteht die Gefahr eines unerwünschten Kurzschlusses insbesondere der stationsseitigen Kontaktelemente durch einen leitenden Gegenstand mit der Folge einer Beschädigung der Basisstation.

Die WO 2015/082017 A1 offenbart ein vorteilhaftes Bodenreinigungssystem, bei dem die Gefahr eines elektrischen Kurzschlusses sowohl stationsseitiger Kontaktelemente als auch der Kontaktelemente der Bodenreinigungsvorrichtung verringert ist.

Auch in der US 5,959,423 ist ein Bodenreinigungssystem mit einem Reinigungsroboter und einer Basisstation für diesen beschrieben, wobei die Basisstation vom Roboter zum Befüllen mit einer Reinigungsflüssigkeit optisch übertragene Signale empfängt und aufgrund dessen eine hohe Komplexität aufweist. Ebenso wie bei dem Bodenreinigungssystem gemäß der EP 1 762 165 A2 besteht das Risiko einer Fehlfunktion.

In der EP 2 648 307 ist ein Robotersystem nach dem Oberbegriff des Anspruchs 1 beschrieben.

Aufgabe der vorliegenden Erfindung ist es, ein Bodenbehandlungssystem und ein Verfahren zum Betreiben eines solchen bereitzustellen, das eine geringe Komplexität aufweist. Ferner wäre es vorzugsweise wünschenswert, wenn das Bodenbehandlungssystem, insbesondere zum Zuführen einer verbrauchbaren Komponente an die Bodenbehandlungsvorrichtung, eine hohe Betriebssicherheit aufweist.

Diese Aufgabe wird durch ein Bodenbehandlungssystem gemäß Anspruch 1 gelöst.

In die Erfindung fließt die Überlegung ein, dass die Bodenbehandlungsvorrichtung eine Steuereinrichtung umfasst, die insbesondere zur Steuerung einer autonomen Bodenbehandlungsvorrichtung erforderlich ist. Jedoch weist in der Regel auch eine handgeführte Bodenbehandlungsvorrichtung eine derartige Steuereinrichtung auf, die Benutzereingaben an einer Bedieneinrichtung entgegen nimmt und Funktionseinheiten wie zum Beispiel ein Reinigungswerkzeug, eine Antriebseinrichtung oder eine Reinigungsmitteldosiereinrichtung abhängig von den Benutzereingaben ansteuert. Beim erfindungsgemäßen Bodenbehandlungssystem ist vorgesehen, dass in der Andockstellung der Bodenbehandlungsvorrichtung Steuerleitungen derselben und der Andockstation über Steuerleitungs-Anschlusselemente kontaktbehaftet miteinander koppeln. Dies erlaubt es, den mindestens einen Aktor zuverlässig und störungsfrei zu betätigen oder anzusteuern, wobei über den mindestens einen Aktor insbesondere die Zufuhr einer verbrauchbaren Komponente von der Andockstation an die Bodenbehandlungsvorrichtung freigebbar oder sperrbar ist. Zudem kann eine Steuereinrichtung in der Andockstation entfallen, so dass diese eine geringe Komplexität aufweist. Die Gefahr einer Fehlfunktion ist äußerst gering. Zu diesem Zweck ist ferner die Detektionseinrichtung vorgesehen um festzustellen, dass die Bodenbehandlungsvorrichtung tatsächlich die Andockstellung einnimmt. Eine irrtümliche Betätigung oder Ansteuerung des mindestens einen Aktors kann dadurch vermieden werden, wodurch das Bodenbehandlungssystem eine hohe Betriebssicherheit aufweist.

Als vorteilhaft erweist es sich, dass die Bodenbehandlungsvorrichtung die elektrische Energiespeichereinrichtung aufweist. Elektrische Energie zum Ansteuern oder Betätigen des mindestens einen Aktors kann von der Bodenbehandlungsvorrichtung bereitgestellt werden. Eine eigenständige Energieversorgung in der Andockstation für den mindestens einen Aktor ist nicht erforderlich.

Über die Steuerleitungen und etwaige Rückleitungen der Bodenbehandlungsvorrichtung und der Andockstation kann ein Steuerstromkreis geschlossen sein, in den stationsseitig der mindestens eine Aktor geschaltet ist. Darauf wird nachfolgend noch eingegangen.

Die Energiespeichereinrichtung umfasst vorzugsweise mindestens eine wiederaufladbare Batterie. Die Steuereinrichtung weist bevorzugt eine Onboard-Ladeeinheit auf, mit der ein Ladevorgang für die mindestens eine Batterie gesteuert und/oder geregelt werden kann.

Als günstig erweist es sich, wenn die Bodenbehandlungsvorrichtung eine Energieversorgungsleitung umfasst und die Andockstation eine Energieversorgungsleitung umfasst, wobei die Energieversorgungsleitungen in der Andockstellung der Bodenbehandlungsvorrichtung über Energieversorgungs-Anschlusselemente kontaktbehaftet miteinander koppeln, und wenn der mindestens eine Aktor einen elektrischen Schaltaktor umfasst oder bildet, mit dem die Energieversorgungsleitung der Andockstation von der Steuereinrichtung freigebbar ist, um die mindestens eine Batterie zum Laden mit elektrischer Energie zu beaufschlagen. Elektrische Energie kann von der Andockstation, die beispielsweise an ein Energieversorgungsnetz angeschlossen ist, über die Energieversorgungsleitungen zum Laden der mindestens einen Batterie bereitgestellt werden. Durch die Detektionseinrichtung und den Schaltaktor wird sichergestellt, dass die Energieversorgungs-Anschlusselemente erst dann mit elektrischer Energie beaufschlagt sind, wenn die Bodenbehandlungsvorrichtung die Andockstellung einnimmt und der Schaltaktor die Energieversorgungsleitung freigibt. Dadurch können elektrische Spannungen stationsseitig vermieden werden, solange die Bodenbehandlungsvorrichtung noch keine Andockstellung einnimmt. Die Betriebssicherheit des Bodenbehandlungssystems ist dadurch erhöht. Die vorliegende Ausführungsform ist insbesondere dann von Vorteil, wenn eine Netzspannung von beispielsweise ca. 230 V oder ca. 120 V an den Energieversorgungs-Anschlusselementen anliegt.

Es versteht sich, dass das Bodenbehandlungssystem in der Andockstation und in der Bodenbehandlungsvorrichtung insbesondere Rückleitungen für die elektrische Energieversorgungsleitungen zur Ausbildung eines Ladestromkreises aufweist, der über die Energieversorgungs-Anschlusselemente geschlossen werden kann.

Günstigerweise sind die Energieversorgungs-Anschlusselemente getrennt von den Steuerleitungs-Anschlusselementen gebildet. Etwaige Störungen zwischen Strömen durch die Steuerleitungen einerseits und die Energieversorgungsleitungen andererseits oder durch Potenzialdifferenzen zwischen den Steuerleitungen einerseits und den Energieversorgungsleitungen andererseits können dadurch vermieden werden. Die elektromagnetische Verträglichkeit des Bodenbehandlungssystems ist gesteigert.

Für den letztgenannten Vorteil ist es besonders günstig, wenn die Energieversorgungs-Anschlusselemente und die Steuerleitungs-Anschlusselemente räumlich getrennt und im Abstand voneinander an der Bodenbehandlungsvorrichtung und an der Andockstation angeordnet sind.

Beispielsweise ist vorgesehen, dass die Bodenbehandlungsvorrichtung und/oder die Andockstation eine Anschlusseinheit umfassen, in der ein jeweiliges Energieversorgungs-Anschlusselement und ein jeweiliges Steuerleitungs-Anschlusselement aufgenommen sind. Sowohl die Bodenbehandlungsvorrichtung als auch die Andockstation können eine jeweilige Anschlusseinheit umfassen. Ein jeweiliges Paar von Anschlusselementen (für Steuerleitungen oder für Energieversorgungsleitungen) kann einen Stecker und eine Buchse umfassen oder bilden. Der Stecker kann stationsseitig und die Buchse vorrichtungsseitig angeordnet sein oder umgekehrt. Mindestens eine Anschlusseinheit kann positionsveränderlich an der Andockstation oder an der Bodenbehandlungsvorrichtung gehalten sein, um das Andocken der Bodenbehandlungsvorrichtung zu erleichtern.

Vorteilhafterweise ist der Schaltaktor von der Steuereinrichtung zum Sperren der Energieversorgungsleitung der Andockstation ansteuerbar. Zum Beenden des Andockvorgangs kann die Energieversorgungsleitung gesperrt werden. Die Energieversorgungs-Anschlusselemente können dadurch beim Abdocken spannungsfrei sein, um elektrische Entladungen zu vermeiden. Die Betriebssicherheit des Bodenbehandlungssystems ist dadurch gesteigert.

Es kann vorgesehen sein, dass die Energieversorgungsleitungen und die Energieversorgungs-Anschlusselemente für eine Netzspannungsversorgung ausgelegt sind, insbesondere ca. 230 V oder ca. 120 V Wechselspannung.

Alternativ oder ergänzend kann vorgesehen sein, dass die Steuerleitungen und die Steuerleitungs-Anschlusselemente für eine Kleinspannung ausgelegt sind, insbesondere ca. 24 V oder ca. 12 V Gleichspannung. Die Kleinspannung kann eine sogenannte Sicherheitskleinspannung sein (ELV, Extra Low Voltage).

Bei einer vorteilhaften Ausführungsform des Bodenbehandlungssystems ist vorgesehen, dass der mindestens eine Aktor durch Vorsehen einer elektrischen Potenzialdifferenz und/oder durch Übertragen eines Steuersignals von der Steuereinrichtung betätigbar oder ansteuerbar ist.

Von Vorteil ist es, wenn die Andockstation eine Mehrzahl von Aktoren umfasst und wenn die Bodenbehandlungsvorrichtung und die Andockstation jeweils eine Mehrzahl von Steuerleitungen aufweisen, wobei ein jeweiliger Aktor über eine Steuerleitung der Bodenbehandlungsvorrichtung und eine Steuerleitung der Andockstation ansteuerbar ist, und wenn ein jeweiliges gemeinsames Steuerleitungs-Anschlusselement an der Bodenbehandlungsvorrichtung und der Andockstation für die jeweiligen Steuerleitungen vorgesehen ist. Dies erlaubt zum einen eine konstruktiv einfache Ausgestaltung der Steuerleitungs-Anschlusselemente und zum anderen eine zuverlässige Kopplung korrespondierender Steuerleitungen.

Als günstig erweist es sich, wenn die Bodenbehandlungsvorrichtung eine mit der Steuereinrichtung gekoppelte Rückleitung umfasst und wenn die Andockstation mindestens eine Rückleitung umfasst, zwischen welche und die mindestens eine Steuerleitung der Andockstation der mindestens eine Aktor geschaltet ist, wobei die Rückleitungen in der Andockstellung der Bodenbehandlungsvorrichtung über Anschlusselemente miteinander koppeln und über die Steuerleitungen und die Rückleitungen ein Steuerstromkreis gebildet ist. Über die Steuerleitungen, den mindestens einen Aktor und die Rückleitungen kann in der Andockstellung ein Strom fließen, wodurch der mindestens eine Aktor von der Steuereinrichtung betätigbar ist. Die Polarität der Steuerleitungen und der Rückleitungen kann derart beschaffen sein, dass der Stromfluss zunächst durch die Steuerleitungen und anschließend durch die Rückleitungen erfolgt oder zunächst durch die Rückleitungen und anschließend durch die Steuerleitungen. Dementsprechend können die Rückleitungen auch als Zuleitungen angesehen werden.

Für die Funktion des mindestens einen Aktors kann vorgesehen sein, dass die Rückleitungen auf einem ersten Potenzial liegen, beispielsweise einem Massepotenzial, und dass die Steuerleitungen zum Betätigen des mindestens einen Aktors auf ein zweites Potenzial angehoben werden, zum Beispiel ein Kleinspannungs-Potenzial von ca. 24 V oder ca. 12 V.

Günstigerweise koppeln die Rückleitungen der Bodenbehandlungsvorrichtung und der Andockstation über das jeweilige Steuerleitungs-Anschlusselement der Bodenbehandlungsvorrichtung und der Andockstation miteinander. Gesonderte Anschlusselemente für die Rückleitungen können dadurch entfallen. Die Steuerleitungs-Anschlusselemente können beispielsweise jeweilige elektrische Kontaktelemente für die Steuerleitungen und die Rückleitungen aufnehmen.

Von Vorteil ist es, wenn die Bodenbehandlungsvorrichtung und die Andockstation jeweils eine gemeinsame Rückleitung umfassen, wobei die Rückleitung der Bodenbehandlungsvorrichtung mit der Steuereinrichtung gekoppelt ist und ein jeweiliger Aktor zwischen die Rückleitung der Andockstation und deren jeweilige Steuerleitung geschaltet ist. Es kann stationsseitig und vorrichtungsseitig jeweils nur eine Rückleitung vorgesehen sein, um eine konstruktiv einfache Ausgestaltung des Bodenbehandlungssystems zu erzielen. Die Rückleitungen liegen vorzugsweise auf einem gemeinsamen Potenzial, zum Beispiel einem Massepotenzial. Über einen jeweiligen Aktor ist eine jeweilige Steuerleitung stationsseitig an deren Rückleitung angeschlossen.

Als vorteilhaft erweist es sich, wenn zur Feststellung, ob die Bodenbehandlungsvorrichtung die Andockstellung einnimmt, von der Detektionseinrichtung ermittelbar ist, ob die Bodenbehandlungsvorrichtung und die Andockstation in elektrisch leitendem Kontakt stehen. Dies ermöglicht eine konstruktiv einfach Ausgestaltung und zugleich zuverlässige Funktion der Detektionseinrichtung.

Bei einer vorteilhaften Ausführungsform des Bodenbehandlungssystems umfasst die Detektionseinrichtung die Steuereinrichtung und mit dieser gekoppelte Detektionsleitungen in der Bodenbehandlungsvorrichtung, die in deren Andockstellung über eine Kontaktbrücke an der Andockstation elektrisch leitend miteinander verbunden sind. Nimmt die Bodenbehandlungsvorrichtung die Andockstellung ein, ist über die Detektionsleitungen in der Bodenbehandlungsvorrichtung und die Kontaktbrücke der Andockstation, welche die Detektionsleitungen miteinander verbindet, ein Detektionsstromkreis geschlossen. Dies kann von der Steuereinrichtung detektiert und als positive Feststellung über die Einnahme der Andockstellung interpretiert werden.

Vorteilhafterweise koppeln die Detektionsleitungen mit der Kontaktbrücke über die Steuerleitungs-Anschlusselemente der Bodenbehandlungsvorrichtung und der Andockstation miteinander. Gesonderte Anschlusselemente für die Detektionsleitungen und die Kontaktbrücke können dadurch eingespart und dem Bodenbehandlungssystem eine konstruktiv einfache Ausgestaltung verliehen werden.

Es kann vorteilhafterweise vorgesehen sein, dass in die Kontaktbrücke mindestens ein Aktor der Andockstation geschaltet ist. Bei Einnahme der Andockstellung ist auf diese Weise ein Stromkreis durch den mindestens einen Aktor hindurch geschlossen. Dadurch kann zum einen die Einnahme der Andockstellung detektiert werden. Zum anderen besteht die Möglichkeit, den Aktor bereits vor der Betätigung oder Ansteuerung auf Funktionstüchtigkeit zu prüfen. Ein derartiger Aktor ist zum Beispiel ein Schaltaktor, insbesondere ein Relais, durch das eine Energieversorgungsleitung der Andockstation freigebbar oder sperrbar ist.

Es kann vorteilhafterweise vorgesehen sein, dass die Detektionseinrichtung die Steuereinrichtung umfasst, von der eine elektrisch leitende Verbindung über eine jeweilige Steuerleitung der Bodenbehandlungsvorrichtung und der Andockstation, mindestens einen Aktor und eine jeweilige Rückleitung der Bodenbehandlungsvorrichtung und der Andockstation hindurch detektierbar ist, welche Rückleitungen in der Andockstellung miteinander koppeln. Die Steuerleitung und die Rückleitung der Bodenbehandlungsvorrichtung können insbesondere als die vorstehend genannten Detektionsleitungen angesehen werden. Die Steuerleitung und die Rückleitung der Andockstation sowie der mindestens eine zwischen diese geschaltete Aktor können die vorstehend genannte Kontaktbrücke ausbilden.

Vorteilhafterweise ist vorgesehen, dass von der Steuereinrichtung elektrisch leitende Verbindungen über jeweilige Steuerleitungen der Bodenbehandlungsvorrichtung und der Andockstation durch zwei oder mehr Aktoren detektierbar sind. Die zwei oder mehr Aktoren können dadurch vor der Betätigung oder Ansteuerung auf Funktionstüchtigkeit überprüft werden.

Günstig ist es, wenn der mindestens eine Aktor einen elektrischen Schaltaktor umfasst oder bildet, insbesondere ein Relais, zum wahlweisen Freigeben oder Sperren einer Energieversorgungsleitung der Andockstation.

Der Schaltaktor kann zum Beispiel wie vorstehend erwähnt die Energieversorgungsleitung der Andockstation freigeben, um die Bodenbehandlungsvorrichtung mit elektrischer Energie zu beaufschlagen.

Alternativ oder ergänzend kann vorgesehen sein, dass die Andockstation ein über die Energieversorgungsleitung beaufschlagbares Pumpaggregat umfasst, über das Flüssigkeit in einer Fluidleitung der Andockstation förderbar ist. Über den Schaltaktor kann das Pumpaggregat ein- oder ausgeschaltet werden, um bei Bedarf Flüssigkeit zu fördern. Beispielsweise kann ein Schmutzflüssigkeitsbehälter der Bodenbehandlungsvorrichtung in einen Behälter der Andockstation (zum Beispiel einen Auffangbehälter) entleert werden, und die Schmutzflüssigkeit kann aus dem Behälter abgepumpt und einem Flüssigkeitsentsorgungsnetz zugeführt werden.

Bei einer vorteilhaften Ausführungsform des Bodenbehandlungssystems umfasst die Andockstation eine Zufuhrleitung, über die der Bodenbehandlungsvorrichtung eine Flüssigkeit zuführbar ist und in die ein Ventil geschaltet ist. Die Flüssigkeit ist insbesondere die vorstehend erwähnte Reinigungsflüssigkeit, speziell Wasser, die in einem Vorratsbehälter der Bodenbehandlungsvorrichtung bevorratet werden kann. Die Zufuhrleitung kann mit einer korrespondieren Flüssigkeitsleitung der Bodenbehandlungsvorrichtung über jeweilige Anschlusselemente dann koppeln, wenn die Bodenbehandlungsvorrichtung die Andockstellung einnimmt. Über die Flüssigkeitsleitung kann der Vorratsbehälter befüllt werden. Alternativ kann vorgesehen sein, dass die Zufuhrleitung bei angedockter Bodenbehandlungsvorrichtung ein Befüllen des Vorratsbehälters direkt ermöglicht, indem eine Behälterwand desselben geöffnet ist und Flüssigkeit aus der Zufuhrleitung in den Behälter strömen kann. Über das Ventil kann die Zufuhrleitung wahlweise freigegeben oder gesperrt werden.

Wie erwähnt kann vorgesehen sein, dass die Zufuhrleitung in der Andockstellung der Bodenbehandlungsvorrichtung mit einer Flüssigkeitsleitung der Bodenbehandlungsvorrichtung über jeweilige Anschlusselemente fluidwirksam verbunden ist. Die Anschlusselemente sind vorzugsweise in den vorstehend erwähnten Anschlusseinheiten angeordnet.

Der mindestens eine Aktor umfasst oder bildet vorzugsweise einen Ventilbetätigungsaktor, über den das Ventil zum wahlweisen Freigeben oder Sperren der Zufuhrleitung betätigbar ist. Bei angedockter Bodenbehandlungsvorrichtung kann die Steuereinrichtung die Zufuhrleitung durch Betätigen des Ventilbetätigungsaktors freigeben, beispielsweise zum Befüllen des Vorratsbehälters. Bei befülltem Vorratsbehälter kann die Steuereinrichtung die Zufuhrleitung durch Betätigung des Ventilbetätigungsaktors sperren.

Alternativ oder ergänzend kann vorgesehen sein, dass mit dem Ventil ein Ventilbetätigungselement gekoppelt ist, das von einer Energieversorgungsleitung des Bodenbehandlungssystems mit elektrischer Energie beaufschlagbar ist.

Eine vorteilhafte Ausführungsform des Bodenbehandlungssystems ist dadurch gekennzeichnet, dass die Bodenbehandlungsvorrichtung ein Kontaktelement aufweist, das in der Andockstellung ein in die Energieversorgungsleitung geschaltetes elektrisches Schaltelement mechanisch kontaktiert und betätigt, wodurch das Ventilbetätigungselement über die Energieversorgungsleitung mit elektrischer Energie beaufschlagt ist. Eine Betätigung des Ventils in der Zufuhrleitung kann bei der vorliegenden Ausführungsform auch ohne Vorsehen eines Aktors erfolgen. Die Komplexität des Bodenbehandlungssystems kann auf diese Weist weiter verringert werden. Das Kontaktelement, beispielsweise ein Taster, Stößel oder dergleichen, kann das Schaltelement mechanisch kontaktieren. Durch Beaufschlagung des Ventilbetätigungselementes mit elektrischer Energie kann die Zufuhrleitung freigegeben werden. Beim Abdocken der Bodenbehandlungsvorrichtung entfällt der mechanische Kontakt des Kontaktelementes mit dem Schaltelement, und die Zufuhrleitung wird gesperrt. Eine derartige Ausführungsform bietet den Vorteil, dass die Andockstation auch mit konstruktiv einfach aufgebauten Bodenbehandlungsvorrichtungen ohne Steuereinrichtung eingesetzt werden kann und dadurch eine hohe Vielseitigkeit aufweist. Bei einer derartigen Bodenbehandlungsvorrichtung besteht zumindest die Möglichkeit, Flüssigkeit als verbrauchbare Komponente zuzuführen, ohne dass hierfür ein Aktor betätigt oder angesteuert werden muss.

Dieselben Vorteile werden durch eine andersartige vorteilhafte Ausführungsform erzielt, bei der die Energieversorgungsleitung einen ersten Leitungsabschnitt und einen zweiten Leitungsabschnitt in der Andockstation umfasst, die in der Andockstellung der Bodenbehandlungsvorrichtung über eine Kontaktbrücke an derselben elektrisch leitend miteinander verbunden sind. In der Andockstellung kann ein Strom über die Leitungsabschnitte und die Kontaktbrücke zur Beaufschlagung des Ventilbetätigungselementes fließen.

Günstigerweise koppeln die Leitungsabschnitte mit der Kontaktbrücke über die Steuerleitungs-Anschlusselemente der Andockstation und der Bodenbehandlungsvorrichtung. Dies ermöglicht eine konstruktiv einfache Ausgestaltung, bei der gesonderte Anschlusselemente für die Leitungsabschnitte und die Kontaktbrücke eingespart werden können.

Vorteilhafterweise ist in die Energieversorgungsleitung ein Spannungswandler geschaltet zum Wandeln einer Netzspannung eines Energieversorgungsnetzes eingangsseitig in eine am Ventilbetätigungselement anliegende Kleinspannung. Die elektrische Sicherheit der Andockstation wird dadurch erhöht, dass am Ventilbetätigungselement keine Netzspannung anliegt.

Von Vorteil ist es, wenn in die Energieversorgungsleitung ein Zeitglied geschaltet ist, über das die Beaufschlagung des Ventilbetätigungselementes mit elektrischer Energie mit Zeitverzögerung nach Betätigen des Schaltelementes oder nach leitender Verbindung der Leitungsabschnitte über die Kontaktbrücke erfolgt. Nach Betätigen des Schaltelementes oder Schließen des Kontaktes über die Kontaktbrücke kann das Ventil mit einer Zeitverzögerung von vorzugsweise wenigen Sekunden zum Freigeben der Zufuhrleitung betätigt werden. Zur Steigerung der Betriebssicherheit kann dies vorgesehen sein um sicherzustellen, dass etwaige Anschlusselemente der Zufuhrleitung und der Flüssigkeitsleitung der Bodenbehandlungsvorrichtung fluiddicht miteinander verbunden sind.

Günstig ist es, wenn die Bodenbehandlungsvorrichtung einen Flüssigkeitsbehälter aufweist und eine daran angeschlossen Auslassleitung, in die ein Ventil geschaltet ist, und wenn mindestens ein Aktor einen elektrischen Ventilbetätigungsaktor oder Antriebsaktor für das Ventil umfasst oder bildet, über den das Ventil zum wahlweisen Freigeben oder Sperren der Auslassleitung betätigbar ist. Der Flüssigkeitsbehälter ist beispielsweise der vorstehend erwähnte Schmutzflüssigkeitsbehälter zum Aufnehmen einer Schmutzflüssigkeit. In der Andockstellung kann der Aktor angesteuert oder betätigt werden, um die Auslassleitung freizugeben. Beispielsweise erfolgt das Entleeren des Flüssigkeitsbehälters in den vorstehend genannten Auffangbehälter der Andockstation. Nach dem Entleeren kann die Auslassleitung wieder gesperrt werden.

Es kann vorgesehen sein, dass mindestens ein Aktor von der Steuereinrichtung abhängig von mindestens einem ihr zugeführten Eingangssignal ansteuerbar ist.

Das Eingangssignal kann zum Beispiel ein Füllstandssignal eines Füllstandssensors sein oder umfassen, der einem Flüssigkeitsbehälter der Bodenbehandlungsvorrichtung oder der Andockstation zugeordnet ist, wobei der mindestens eine Aktor ein(en) Ventilbetätigungsaktor umfasst oder ausbildet zum wahlweisen Freigeben oder Sperren einer Fluidleitung der Andockstation oder der Bodenbehandlungsvorrichtung. Ist der Flüssigkeitsbehälter ein Vorratsbehälter, kann anhand des Eingangssignals von der Steuereinrichtung vorzugsweise ermittelt werden, ob dieser zu befüllen ist, oder ob beim Befüllen ein vorgebbarer Füllstand erreicht ist. Bedarfsabhängig kann die Fluidverbindung freigegeben oder gesperrt werden. Ist der Flüssigkeitsbehälter beispielsweise ein Auffangbehälter der Andockstation für Schmutzflüssigkeit, kann der Füllstand erfasst und bedarfsabhängig ein elektrischer Schaltaktor zum Betätigen des vorstehend genannten Pumpaggregats angesteuert oder betätigt werden.

Ein Eingangssignal kann ein Ladezustandssignal einer wiederaufladbaren Batterie der Bodenbehandlungsvorrichtung sein oder umfassen, wobei der mindestens eine Aktor einen elektrischen Schaltaktor umfasst oder ausbildet zum wahlweisen Freigeben oder Sperren einer Energieversorgungsleitung der Andockstation. Ist die Batterie zu laden, kann die Energieversorgungsleitung über den Schaltaktor freigegeben werden. Ist die Batterie hinreichend geladen, kann die Energieversorgungsleitung über den Schaltaktor gesperrt werden.

Die Bodenbehandlungsvorrichtung kann bei einer vorteilhaften Ausführungsform des Bodenbehandlungssystems selbstfahrend und selbstlenkend sein, um eine autonome Behandlung einer Bodenfläche zu ermöglichen.

Alternativ oder ergänzend kann vorgesehen sein, dass die Bodenbehandlungsvorrichtung handgeführt ist und von einer Bedienperson über die Bodenfläche geführt werden kann. Dabei kann es sich um eine Aufsteh- oder Aufsitz-Vorrichtung (Ride-on) handeln oder um eine Nachlauf-Vorrichtung (Walk-Behind).

Je nach Betriebsart kann vorgesehen sein, das die Bodenbehandlungsvorrichtung selbstfahrend und selbstlenkend oder handgeführt betrieben wird.

Die Bodenbehandlungsvorrichtung kann vorteilhafterweise eine Bodenreinigungsvorrichtung sein und mindestens ein Reinigungsaggregat zum Reinigen einer Bodenfläche aufweisen. Beispielsweise umfasst das Reinigungsaggregat ein drehend antreibbares walzenförmiges oder tellerförmiges Reinigungswerkzeug. Weiter kann die Bodenbehandlungsvorrichtung einen Vorratsbehälter für eine verbrauchbare Komponente in Form einer Reinigungsflüssigkeit umfassen und/oder einen Schmutzflüssigkeitsbehälter.

Die Bodenreinigungsvorrichtung kann insbesondere eine Scheuersaugmaschine sein.

Wie bereits erwähnt betrifft die vorliegende Erfindung auch ein Verfahren gemäß Anspruch 18. Ein erfindungsgemäßes, die eingangs genannte Aufgabe lösendes Verfahren zum Betreiben eines Bodenbehandlungssystems, das eine mobile Bodenbehandlungsvorrichtung und eine Andockstation für diese umfasst, sieht vor, dass in einer Andockstellung der Bodenbehandlungsvorrichtung Anschlusselemente der Bodenbehandlungsvorrichtung und der Andockstation kontaktbehaftet miteinander koppeln und eine elektrische Verbindung zwischen einer Steuereinrichtung der Bodenbehandlungsvorrichtung und mindestens einem in der Andockstation angeordneten Aktor über jeweilige Steuerleitungen der Bodenbehandlungsvorrichtung und der Andockstation gebildet ist, wobei festgestellt wird, dass die Bodenbehandlungsvorrichtung die Andockstellung einnimmt und bei positiver Feststellung der mindestens eine Aktor von der Steuereinrichtung über die Steuerleitungen angesteuert oder betätigt wird.

Die Vorteile, die bereits im Zusammenhang mit der Erläuterung des erfindungsgemäßen Bodenbehandlungssystems erwähnt wurden, können durch das Verfahren ebenfalls erzielt werden. Diesbezüglich kann auf voranstehende Erläuterungen verwiesen werden.

Vorteilhafte Ausführungsbeispiele des erfindungsgemäßen Verfahrens ergeben sich durch vorteilhafte Ausführungsformen des erfindungsgemäßen Bodenbehandlungssystems. Auch diesbezüglich kann auf voranstehende Äußerungen verwiesen werden.

Die nachfolgende Beschreibung bevorzugter Ausführungsform der Erfindung dient im Zusammenhang mit der Zeichnung der näheren Erläuterung der Erfindung. Es zeigen:
- Figur 1:: Eine Seitenansicht eines erfindungsgemäßen Bodenbehandlungssystems, umfassend eine Andockstation und eine an dieser eine Andockstellung einnehmende Bodenbehandlungsvorrichtung, ausgestaltet als Bodenreinigungsvorrichtung;
- Figur 2:: Ein schematisches Blockdiagramm des Bodenbehandlungssystems (Teildarstellung) aus Figur 1;

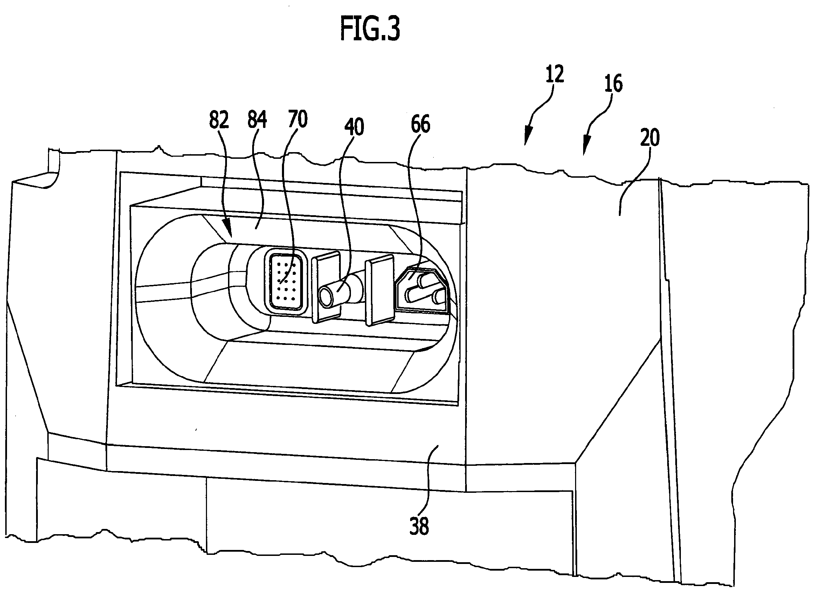

- Figur 3:: Eine perspektivische vereinfachte Teildarstellung einer Vorderseite der Bodenbehandlungsvorrichtung aus Figur 1, wobei eine Anschlusseinheit mit mehreren Anschlusselementen der Bodenbehandlungsvorrichtung dargestellt ist;

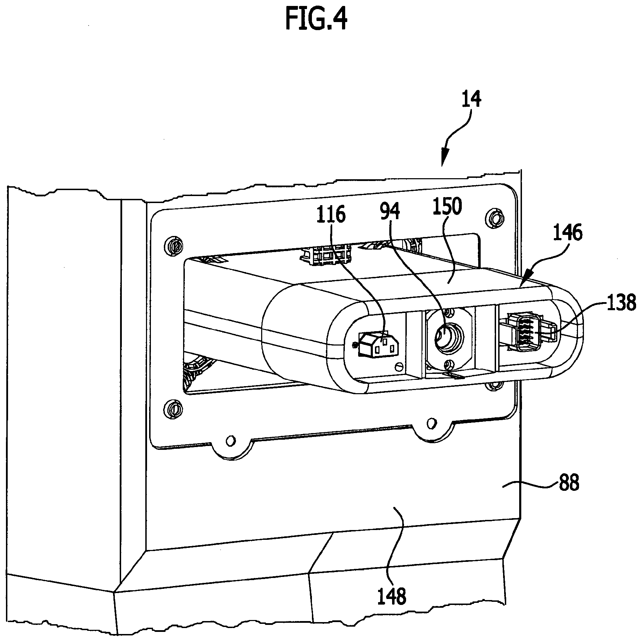

- Figur 4:: Eine perspektivische vereinfachte Teildarstellung der Andockstation aus Figur 1, wobei eine Anschlusseinheit mit mehreren Anschlusselementen der Andockstation dargestellt ist;
- Figur 5:: Schematisch miteinander koppelnde Anschlusselemente der Bodenbehandlungsvorrichtung und der Andockstation in einem Blockschaltbild;
- Figur 6:: Eine weitere bevorzugte Ausführungsform eines erfindungsgemäßen Bodenbehandlungssystems in einer der Figur 2 entsprechenden Weise;
- Figur 7:: Schematisch miteinander koppelnde Anschlusselemente der Bodenbehandlungsvorrichtung und der Andockstation; und
- Figur 8:: Eine dritte bevorzugte Ausführungsform eines erfindungsgemäßen Bodenbehandlungssystems in einer der Figur 2 entsprechenden Weise.

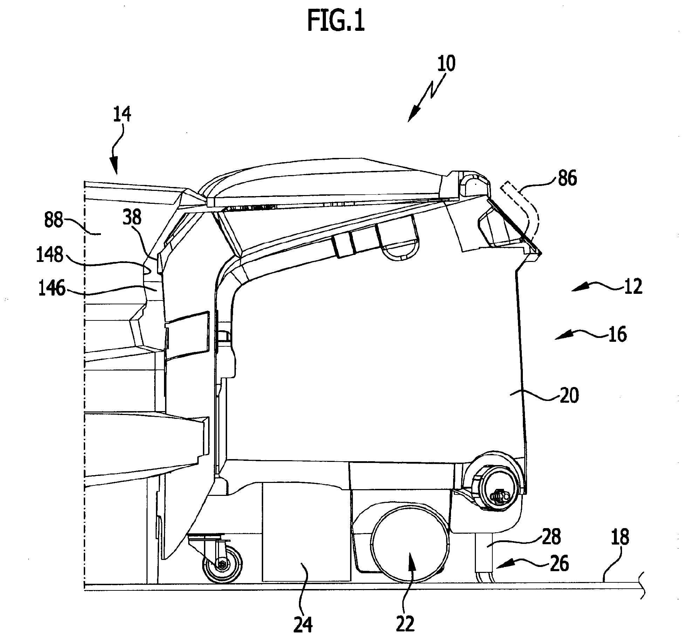

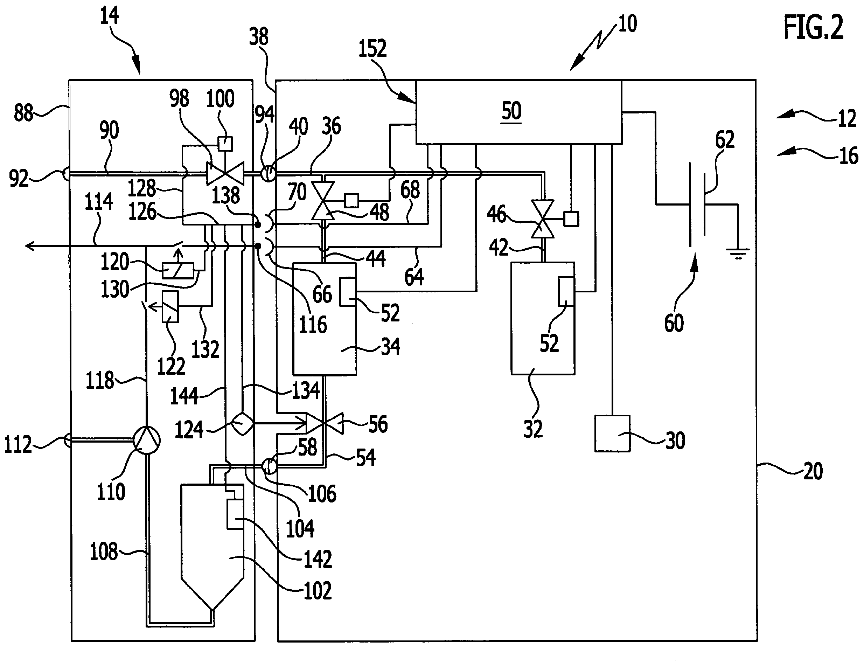

Die Figuren 1 und 2 zeigen eine mit dem Bezugszeichen 10 belegte vorteilhafte Ausführungsform eines erfindungsgemäßen Bodenbehandlungssystems, das eine Bodenbehandlungsvorrichtung 12 und eine Andockstation 14 für diese aufweist. Die Bodenbehandlungsvorrichtung 12 ist als Bodenreinigungsvorrichtung 16 ausgestaltet und wird nachfolgend vereinfachend Vorrichtung 16 bezeichnet. Die Vorrichtung 16 dient zum Reinigen einer Bodenfläche 18.

Die Vorrichtung 16 umfasst ein Gehäuse 20 mit einem untenseitig daran gehaltenen Fahrwerk 22 zum Verfahren auf der Bodenfläche 18. Weiter umfasst die Vorrichtung 16, eine Scheuersaugmaschine, ein Reinigungsaggregat 24, das insbesondere mindestens ein um eine Drehachse drehend antreibbares walzenförmiges oder tellerförmiges Reinigungswerkzeug aufweist (nicht gezeigt). Ein weiteres Reinigungsaggregat ist in Form Schmutzaufnahmevorrichtung 26 vorgesehen. Die Schmutzaufnahmevorrichtung 26 umfasst eine Saugleiste 28 und ein Saugaggregat 30, um die Saugleiste 28 mit Unterdruck zu beaufschlagen.

Positions- und Orientierungsangaben wie beispielsweise "unten", "oben" oder dergleichen sind vorliegend auf eine Gebrauchsstellung des Bodenbehandlungssystems 10 auf der Bodenfläche 18 bezogen aufzufassen.

Weiter umfasst die Vorrichtung 16 einen Vorratsbehälter 32 für eine Reinigungsflüssigkeit, insbesondere Wasser, sowie einen Schmutzflüssigkeitsbehälter 34. Im Betrieb der Vorrichtung 16 kann Reinigungsflüssigkeit aus dem Vorratsbehälter 32 zur Beaufschlagung der Bodenfläche 18 eingesetzt werden. Unter der Wirkung des Reinigungsaggregates 24 kann die Bodenfläche 18 abgereinigt werden, wobei die Reinigungsflüssigkeit zur Steigerung der Reinigungswirkung dient. Ergänzend kann eine Reinigungschemikalie beigemischt werden. Das Gemisch aus Schmutz und Reinigungsflüssigkeit, die Schmutzflüssigkeit, kann mittels der Schmutzaufnahmevorrichtung 26 von der Bodenfläche 18 aufgenommen und im Schmutzflüssigkeitsbehälter 34 abgeschieden werden.

Die Vorrichtung 16 umfasst eine Flüssigkeitsleitung 36 mit einem an einer Vorderseite 38 der Vorrichtung 16 angeordneten Anschlusselement 40, vorliegend einen Anschlussnippel. Die Flüssigkeitsleitung 36 verzweigt in einen ersten Leitungsabschnitt 42, der in den Vorratsbehälter 32 mündet, sowie in einen zweiten Leitungsabschnitt 44, der in den Schmutzflüssigkeitsbehälter 34 mündet.

"Vorderseite" bezieht sich auf eine Längs- oder Hauptbewegungsrichtung der Vorrichtung 16. In der Andockstellung der Vorrichtung 16 ist die Vorderseite 38 einer Stirnseite der Andockstation 14 zugewandt.

In die Leitungsabschnitte 42, 44 sind Ventile 46, 48 geschaltet. Eine Steuereinrichtung 50 der Vorrichtung 16 ist signalwirksam mit den Ventilen 46, 48 gekoppelt. Die Leitungsabschnitte 42 und 44 können durch die Steuereinrichtung 50 wahlweise gesperrt oder freigegeben werden. Dies gibt die Möglichkeit, darauf wird nachfolgend noch eingegangen, den Vorratsbehälter 32 zu befüllen bzw. den Schmutzflüssigkeitsbehälter 34 zu spülen und dadurch zu reinigen.

Ein jeweiliger Füllstandssensor 52 am Vorratsbehälter 32 und am Schmutzflüssigkeitsbehälter 34 ist signalwirksam mit der Steuereinrichtung 50 gekoppelt, um dieser ein Füllstandssignal bezüglich des Flüssigkeitspegels im Vorratsbehälter 32 bzw. Schmutzflüssigkeitsbehälter 34 bereitzustellen.

An eine Auslassöffnung des Schmutzflüssigkeitsbehälters 34 ist eine Auslassleitung 54 angeschlossen. In die Auslassleitung 54 ist ein Ventil 56 geschaltet, das auf nachfolgend noch beschriebene Weise betätigbar ist. Endseitig ist an der Auslassleitung 54 ein Anschlusselement 58 angeordnet, das an der Vorderseite 38 positioniert ist.

Die Vorrichtung 16 umfasst eine Energiespeichereinrichtung 60 zur Energieversorgung mit mindestens einer wiederaufladbaren Batterie 62. Elektrische Energie der Energiespeichereinrichtung 60 dient zur Eigenversorgung der Vorrichtung 16 und von Aktoren der Andockstation 14 auf nachfolgend erläuterte Weise.

Der Vorrichtung 16 kann elektrische Energie über eine Energieversorgungsleitung 64 zugeführt werden. Die Energieversorgungsleitung 64 ist mit der Steuereinrichtung 50 verbunden und weist ein Energieversorgungs-Anschlusselement 66 auf, das an der Vorderseite 38 angeordnet ist.

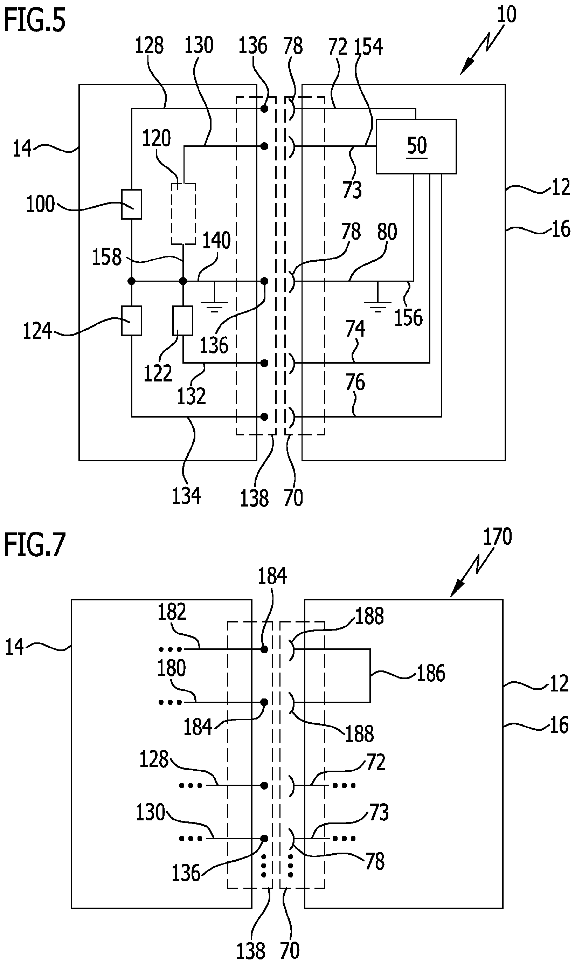

Darüber hinaus weist die Vorrichtung 16 eine Mehrzahl von Steuerleitungen auf, die in Figur 2 als gemeinsame Steuerleitungen dargestellt und mit dem Bezugszeichen 68 belegt sind. Die Steuerleitungen 68 sind mit der Steuereinrichtung 50 verbunden. Endseitig weisen die Steuerleitungen 68 ein Steuerleitungs-Anschlusselement 70 auf, in dem elektrische Kontaktelemente 78 aller Steuerleitungen 68 aufgenommen sind. Das Steuerleitungs-Anschlusselement 70 ist an der Vorderseite 38 angeordnet. Figur 5 zeigt die Steuerleitungen 72, 73, 74 und 76 der Vorrichtung 16, die bei der Darstellung der Figur 2 gemeinsam durch die Steuerleitung 68 dargestellt sind. Jeweilige elektrische Kontaktelemente 78 sind in Figur 5 ebenfalls dargestellt.

Der Übersichtlichkeit halber entfällt in Figur 2 auch die Darstellung einer gemeinsamen Rückleitung 80 der Vorrichtung 16, welche Rückleitung 80 mit der Steuereinrichtung 50 gekoppelt ist. Die Steuerleitungen 68, am Beispiel der Figur 5 die Steuerleitungen 72, 73, 74 und 76, können relativ zur Rückleitung 80 auf ein unterschiedliches elektrisches Potenzial gebracht werden. Ein Kontaktelement 78 endseitig an der Rückleitung 80 ist ebenfalls im Steuerleitungs-Anschlusselement 70 aufgenommen. Die Rückleitung 80 kann insbesondere auf einem Massepotenzial liegen.

Figur 2 zeigt auch die Energieversorgungsleitung 64 einpolig, ebenso wie Signalleitungen der Füllstandssensoren 52 und Steuerleitungen für die Ventile 46, 48 und eine Leitung zum Ansteuern des Saugaggregates 30. Es versteht sich, dass der Fachmann sich darüber im Klaren ist, dass diese Leitungen mehrpolig sein können. Insbesondere ist für die Energieversorgungsleitung 64 eine in der Zeichnung nicht gezeigte Rückleitung vorgesehen.

Die Vorrichtung 16 umfasst an der Vorderseite 38 eine Anschlusseinheit 82. Die Anschlusseinheit 82 weist ein Gehäuse 84 auf, in dem das Anschlusselement 40 der Flüssigkeitsleitung 36, das Energieversorgungs-Anschlusselement 66 der Energieversorgungsleitung 64 und das Steuerleitungs-Anschlusselement 70 der Steuerleitungen 68 und der Rückleitung 80 aufgenommen sind. Das Anschlusselement 40 ist zwischen dem Energieversorgungs-Anschlusselement 66 und dem Steuerleitungs-Anschlusselement 70 (diese sind vorliegend jeweils als Buchse ausgestaltet) positioniert, so dass die Letzteren voneinander beabstandet sind. Dies dient der Steigerung der Betriebssicherheit und der elektromagnetischen Verträglichkeit des Bodenbehandlungssystems 10.

Die Vorrichtung 16 kann eine selbstfahrende und selbstlenkende Bodenreinigungsvorrichtung sein (ein Bodenreinigungsroboter), mit der eine autonome Reinigung der Bodenfläche 18 durchgeführt werden kann. Die Steuereinrichtung 50 kann die Bewegungen der Vorrichtung 16 und deren Reinigungsaggregate sowie das Saugaggregat 30 steuern.

Alternativ oder ergänzend kann vorgesehen sein, dass die Vorrichtung 16 handgeführt ist und von einer Bedienperson über die Bodenfläche 18 geführt wird. Es kann ein Antrieb für das Fahrwerk 22 vorgesehen sein. Die Bedienperson kann über eine in Figur 1 schematisch dargestellte Handhabe 86, die insbesondere eine Griffeinrichtung umfasst, auf die Vorrichtung 16 einwirken.

Die Andockstation 14 umfasst ein Gehäuse 88, das eine Zufuhrleitung 90 aufweist. Die Zufuhrleitung 90 ist eine Flüssigkeitsleitung, die mit einem Anschlusselement 92 an ein Flüssigkeitsversorgungsnetz anschließbar ist. Am anderen Ende umfasst die Zufuhrleitung 90 ein Anschlusselement 94 zum Verbinden mit dem Anschlusselement 40. In die Zufuhrleitung 90 ist ein Ventil 98 geschaltet, das mit einem Aktor der Andockstation 14, nämlich einem Ventilbetätigungsaktor 100, gekoppelt ist.

Im Gehäuse 88 ist ferner ein Auffangbehälter 102 für Schmutzflüssigkeit vorgesehen, in den eine Zufuhrleitung 104 der Andockstation 14 mündet. Ein Anschlusselement 106 kann mit dem Anschlusselement 58 koppeln.

Ausgangsseitig des Auffangbehälters 102 ist eine Entsorgungsleitung 108 für Schmutzflüssigkeit angeschlossen. Ein Pumpaggregat 110 der Andockstation 14 ist in die Entsorgungsleitung 108 geschaltet. Schmutzflüssigkeit kann bei aktiviertem Pumpaggregat 110 aus dem Auffangbehälter 102 abgepumpt und über ein Anschlusselement 112 einem Flüssigkeitsentsorgungsnetz zugeführt werden.

Die Andockstation 14 umfasst eine Energieversorgungsleitung 114, die an ein Energieversorgungsnetz anschließbar ist. Endseitig ist an der Energieversorgungsleitung 114 ein Energieversorgungs-Anschlusselement 116 zum Koppeln mit dem Energieversorgungs-Anschlusselement 66 vorgesehen. Von der Energieversorgungsleitung 114 zweigt eine Energieversorgungsleitung 118 ab, an die das Pumpaggregat 110 angeschlossen ist.

Die Andockstation 14 umfasst weitere Aktoren, nämlich einen elektrischen Schaltaktor 120 zum wahlweisen Freigeben oder Sperren der Energieversorgungsleitung 114. Außerdem ist ein elektrischer Schaltaktor 122 vorgesehen zum wahlweisen Freigeben oder Sperren der Energieversorgungsleitung 118. Die Schaltaktoren 120, 122 sind als Relais ausgestaltet.

Außerdem umfasst die Andockstation 14 einen weiteren Aktor, vorliegend ausgestaltet als Ventilbetätigungsaktor 124. Der Ventilbetätigungsaktor 124 wirkt auf das Ventil 56 zum wahlweisen Freigeben oder Sperren der Auslassleitung 54 ein. Der Ventilbetätigungsaktor 124 kann beispielsweise ein Antriebsaktor für ein als Schlauchklemme ausgestaltetes Ventil 56 sein, um eine schlauchartige Auslassleitung 54 wahlweise abzuklemmen oder freizugeben.

Ebenso wie die Vorrichtung 16 umfasst die Andockstation 14 eine Mehrzahl von Steuerleitungen. Die Steuerleitungen sind zum Betätigen oder Ansteuern der Aktoren 100, 120, 122 und 124 vorgesehen und in Figur 2 abschnittsweise der Übersichtlichkeit halber durch eine gemeinsame Steuerleitung 126 symbolisiert. Wie aus Figur 2 und Figur 5 ebenfalls hervorgeht, umfassen die Steuerleitungen 126 eine Steuerleitung 128, die an den Ventilbetätigungsaktor 100 angeschlossen ist und der Steuerleitung 72 zugeordnet ist. Ferner ist eine Steuerleitung 130 vorgesehen, die an den Schaltaktor 120 angeschlossen und der Steuerleitung 73 zugeordnet ist. Außerdem umfassen die Steuerleitungen 126 eine Steuerleitung 132, die an den Schaltaktor 122 angeschlossen und der Steuerleitung 74 zugeordnet ist. Ferner umfassen die Steuerleitungen 126 eine Steuerleitung 134, die an den Ventilbetätigungsaktor 124 angeschlossen und der Steuerleitung 76 zugeordnet ist.

Endseitige Kontaktelemente 136 der Steuerleitungen 126 sind in einem gemeinsamen Steuerleitungs-Anschlusselement 138 zum Koppeln mit dem Steuerleitungs-Anschlusselement 70 aufgenommen.

Die Andockstation 14 umfasst in entsprechender Weise wie die Vorrichtung 16 eine den Steuerleitungen 126 zugeordnete Rückleitung 140. Es ist eine gemeinsame Rückleitung 140 vorgesehen, relativ zu der die Steuerleitungen 126 auf ein unterschiedliches elektrisches Potenzial bringbar sind. Beispielsweise liegt die Rückleitung auf einem Massepotenzial. Auch ein Kontaktelement 136 der Rückleitung 140 ist in dem Steuerleitungs-Anschlusselement 138 aufgenommen.

Ein Füllstandssensor 142 ist vorgesehen, über den der Pegel an Flüssigkeit im Auffangbehälter 102 ermittelbar ist. Der Füllstandssensor 142 ist über eine Signalleitung 144 an das Steuerleitungs-Anschlusselement 138 angeschlossen. In der Vorrichtung 16 ist eine korrespondierende Signalleitung vorgesehen, die an das Steuerleitungs-Anschlusselement 70 angeschlossen ist, um der Steuereinrichtung 50 ein Füllstandssignal des Füllstandssensors 142 bereitzustellen (in der Zeichnung nicht gezeigt).

Ebenso wie die Energieversorgungsleitung 64 können die Energieversorgungsleitungen 114, 118 in der Zeichnung nicht dargestellte Rückleitungen umfassen. Entsprechendes gilt für die Signalleitung 144, deren Rückleitung auch durch die Rückleitung 140 gebildet sein kann.

Die Andockstation 14 umfasst eine Anschlusseinheit 146, die an einer der Vorrichtung 16 zugewandten Stirnseite 148 der Andockstation 14 angeordnet ist. Die Anschlusseinheit 146 weist ein Gehäuse 150 auf, das bevorzugt positionsveränderlich an der Andockstation 14 gehalten ist, um das Andocken der Vorrichtung 16 zu erleichtern.

Das Gehäuse 150 nimmt das Anschlusselement 94 auf, das vorliegend als Buchse ausgestaltet ist. Das Energieversorgungs-Anschlusselement 116 und das Steuerleitungs-Anschlusselement 138 sind auf einander abgewandten Seiten des zwischen ihnen positionierten Anschlusselementes 94 angeordnet.

Die Energieversorgungsleitungen 64, 114 und 118 und die Energieversorgungs-Anschlusselemente 66, 116 sind für eine Netzspannungsversorgung ausgelegt, beispielsweise ca. 230 V oder ca. 120 V. Demgegenüber sind die Steuerleitungen 68 und 126 und die Steuerleitungs-Anschlusselemente 70, 138 für eine Niederspannung ausgelegt, beispielsweise ca. 24 V oder ca. 12 V.

Die Vorrichtung 16 kann zum Auffüllen oder Nachladen einer verbrauchbaren Komponente oder zum Ablassen von Schmutzflüssigkeit in eine Andockstellung an der Andockstation 14 bewegt werden. Dies kann selbsttätig unter der Steuerung durch die Steuereinrichtung 50 erfolgen oder handgeführt durch eine Bedienperson. Auslösend für ein Verfahren in die Andockstellung kann beispielsweise ein Signal eines der Füllstandssensoren 52 aufgrund eines leeren Vorratsbehälters 32 bzw. vollen Schmutzflüssigkeitsbehälters 34 sein und/oder ein Signal der Energiespeichereinrichtung 60, wenn deren Ladezustand einen Schwellenwert unterschreitet.

Zum Einnehmen der Andockstellung verfährt die Vorrichtung 16 so an die Andockstation 14, dass die Anschlusseinheiten 82, 146 an- und insbesondere ineinander gefügt werden. Dabei können die Anschlusselemente 40 und 94 fluidwirksam sowie die Energieversorgungs-Anschlusselemente 66 und 116 und die Steuerleitungs-Anschlusselemente 70 und 138 kontaktbehaftet elektrisch miteinander koppeln. Die Flüssigkeitsleitung 36 ist mit der Zufuhrleitung 90 verbunden. Die Energieversorgungsleitung 64 ist mit der Energieversorgungsleitung 114 verbunden. Die Steuerleitungen 68 sind mit den Steuerleitungen 126 und die Rückleitung 80 mit der Rückleitung 140 verbunden. Außerdem können die Anschlusselemente 58 und 106 zum Ausbilden einer fluidwirksamen Verbindung der Auslassleitung 54 mit der Zufuhrleitung 104 koppeln.

In der Andockstellung sind dementsprechend die Steuerleitungen 72 und 128, 73 und 130, 74 und 132 sowie 76 und 134 elektrisch über die jeweiligen Kontaktelemente 78 bzw. 136 miteinander verbunden. Dies erlaubt es, wie nachfolgend erläutert, die Aktoren 100, 120, 122 und 124 von der Steuereinrichtung 50 über einen jeweiligen Steuerstromkreis zu betätigen oder anzusteuern. Dabei kann die Steuereinrichtung 50 der Vorrichtung 16 eingesetzt werden. Zur Verringerung der Komplexität des Bodenbehandlungssystems 10 ist es nicht erforderlich, dass die Andockstation 14 eine eigenständige Steuereinrichtung umfasst. Die elektrische Energie kann von der Energiespeichereinrichtung 60 bereitgestellt werden.

Zur Erhöhung der Betriebssicherheit des Bodenbehandlungssystems 10 weist dieses ferner eine Detektionseinrichtung 152 auf, um festzustellen, wenn die Vorrichtung 16 die Andockstellung an der Andockstation 14 einnimmt. Die Detektionseinrichtung 152 umfasst die Steuereinrichtung 50 und Detektionsleitungen 154, 156 in der Vorrichtung 16, die mit der Steuereinrichtung 50 gekoppelt sind. Die Detektionsleitungen 154, 156 werden vorliegend zum Beispiel durch die Steuerleitung 73 und die Rückleitung 80 ausgebildet.

Stationsseitig umfasst die Detektionseinrichtung 152 eine Kontaktbrücke 158. Die Detektionseinrichtung 152 ist so beschaffen, dass zur Feststellung, ob die Vorrichtung 16 die Andockstellung einnimmt, ermittelbar ist, ob die Vorrichtung 16 und die Andockstation 14 in elektrisch leitendem Kontakt stehen. Zu diesem Zweck kann die Steuereinrichtung 50 ermitteln, ob die Detektionsleitungen 154, 156 stationsseitig über die Kontaktbrücke 158 elektrisch leitend miteinander verbunden sind und ein Detektionsstromkreis geschlossen ist.

Bei der Vorrichtung 16 wird die Kontaktbrücke 158 durch die Steuerleitung 130, die Rückleitung 140 und den zwischen sie geschalteten Schaltaktor 120 ausgebildet. Dementsprechend ist in die Kontaktbrücke 158 der Schaltaktor 120 geschaltet.

Die Einnahme der Andockstellung kann von der Steuereinrichtung 50 festgestellt werden, indem die elektrisch leitende Verbindung der Detektionsleitungen 154, 156 über die Kontaktbrücke 158 überprüft wird. Bei positiver Feststellung geht die Steuereinrichtung 50 davon aus, dass die Vorrichtung 16 korrekt an die Andockstation 14 angedockt ist.

Die Überprüfung der elektrisch leitenden Verbindung über die Kontaktbrücke 158 bietet ferner die Möglichkeit, den Schaltaktor 120 auf Funktionstüchtigkeit zu überprüfen. Im vorliegenden Fall wird beispielsweise der Stromfluss durch eine Steuer- oder Erregerspule des Schaltaktors 120 geprüft.

Es kann insbesondere möglich sein, dass ferner eine elektrische Verbindung durch mindestens einen weiteren Aktor überprüft wird, zur Verifizierung der Einnahme der Andockstellung und/oder zur Überprüfung der Funktionstüchtigkeit des entsprechenden Aktors. Beispielsweise wird der Schaltaktor 122 ergänzend auf einen Stromdurchgang überprüft, wobei die Steuerleitung 74 und die Rückleitung 80 als Detektionsleitungen wirken und die Steuerleitung 132 und die Rückleitung 140 mit dem in sie geschalteten Schaltaktor 122 eine Kontaktbrücke bilden.

In Figur 5 ist der Schaltaktor 120 gestrichelt dargestellt. Dies soll symbolisieren, dass die Kontaktbrücke 158 auch in einer kurzgeschlossenen Verbindung zwischen dem Kontaktelement 136 der Rückleitung 140 und einem weiteren Kontaktelement 136 bestehen kann. Eine derartige Kurzschlussverbindung kann im Steuerleitungs-Anschlusselement 138 aufgenommen sein.

Die Betriebssicherheit des Bodenbehandlungssystems 10 ist dadurch gesteigert, dass die Aktoren 100, 120, 122 und 124 von der Steuereinrichtung 50 erst dann betätigt oder angesteuert werden, wenn eine positive Feststellung über die Einnahme der Andockstellung vorliegt.

Insbesondere ist die Energieversorgungsleitung 114 beim Andocken zunächst unterbrochen. Dadurch sind die elektrischen Kontaktelemente des Energieversorgungs-Anschlusselementes 116 spannungsfrei. Die Steuereinrichtung 50 kann den Schaltaktor 120 zum Laden der mindestens einen Batterie 62 (falls erforderlich) über die Steuerleitungen 73, 130 betätigen. Das Relais gibt die Energieversorgungsleitung 114 frei, so dass die Steuereinrichtung 50 über diese und die Energieversorgungsleitung 64 mit elektrischer Energie beaufschlagt wird. Über einen Onboard-Lader der Steuereinrichtung 50 kann die Batterie 62 geladen werden.

Die Steuereinrichtung 50 kann den Schaltaktor 120 vor dem Abdocken der Vorrichtung 16 betätigen, um die Energieversorgungsleitung 114 zu sperren. Kontaktelemente des Anschlusselementes 116 sind dadurch spannungslos, und etwaige Entladungen beim Abdocken der Vorrichtung 16 können vermieden werden.

Auch die anderen Aktoren können in der Andockstellung der Vorrichtung 16 betätigt werden.

Beispielsweise steuert die Steuereinrichtung 50 den Ventilbetätigungsaktor 100 zum Freigeben der Zufuhrleitung 90 an. Über die Fluidverbindung mit der Flüssigkeitsleitung 36 kann der Vorratsbehälter 32 mit Reinigungsflüssigkeit befüllt werden. Der Schmutzflüssigkeitsbehälter 34 kann zur Reinigung gespült werden. Die Ventile 46, 48 können von der Steuereinrichtung 50 in geeigneter Weise angesteuert werden. Durch weitere Ansteuerung des Ventilbetätigungsaktors 100 über die Steuereinrichtung 50 kann die Zufuhrleitung 90 gesperrt werden.

Die Steuereinrichtung 50 kann ferner den Ventilbetätigungsaktor 124 ansteuern, um über das Ventil 56 die Auslassleitung 54 freizugeben. Schmutzflüssigkeit kann aus dem Schmutzflüssigkeitsbehälter 34 in den Auffangbehälter 102 abgelassen werden. Auch Spülflüssigkeit vom Spülen des Schmutzflüssigkeitsbehälters 34 kann abgelassen werden. Durch erneute Ansteuerung des Ventilbetätigungsaktors 124 kann die Steuereinrichtung 50 über das Ventil 56 die Auslassleitung 54 sperren.

Weiter kann die Steuereinrichtung 50 den Schaltaktor 122 zum Freigeben der Energieversorgungsleitung 118 betätigen. Das Pumpaggregat 110 ist mit elektrischer Energie beaufschlagt und kann Schmutzflüssigkeit aus dem Auffangbehälter 102 abpumpen und dem Flüssigkeitsentsorgungsnetz zuführen.

Durch erneute Ansteuerung des Schaltaktors 122 kann die Energieversorgungsleitung 118 gesperrt und das Pumpaggregat 110 abgeschaltet werden.

Es versteht sich, dass die Aktivierung des Pumpaggregates 110 und das Schalten der Ventile 98, 46 und 48 insbesondere von einem Signal des jeweiligen Füllstandssensors 142 oder 52 erfolgen kann.

Das Bodenbehandlungssystem 10 weist, wie erwähnt, eine geringe Komplexität insbesondere auf der Seite der Andockstation 14 auf. Durch Einsparung einer Steuereinrichtung in der Andockstation 14 ist es insbesondere nicht erforderlich, zum Auslösen eines Ladevorgangs, eines Befüllvorgangs, eines Spülvorgangs oder eines Entleerungsvorgangs Signale zwischen der Vorrichtung 16 und der Andockstation 14 zu übertragen. Die Fehleranfälligkeit des Bodenbehandlungssystems 10 im Vergleich zu herkömmlichen Systemen ist erheblich verringert. Die Betätigung der Aktoren 100, 120, 122 und 124 kann frei von einer Signalübertragung beispielsweise allein in der Bildung einer Potenzialdifferenz der Steuerleitungen 68, 126 relativ zu den Rückleitungen 80, 140 erfolgen.

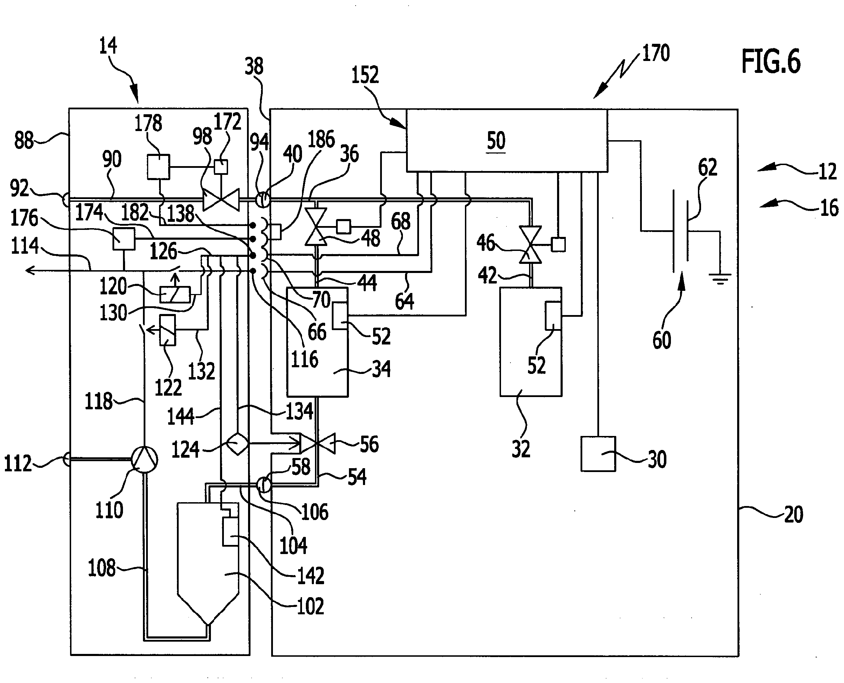

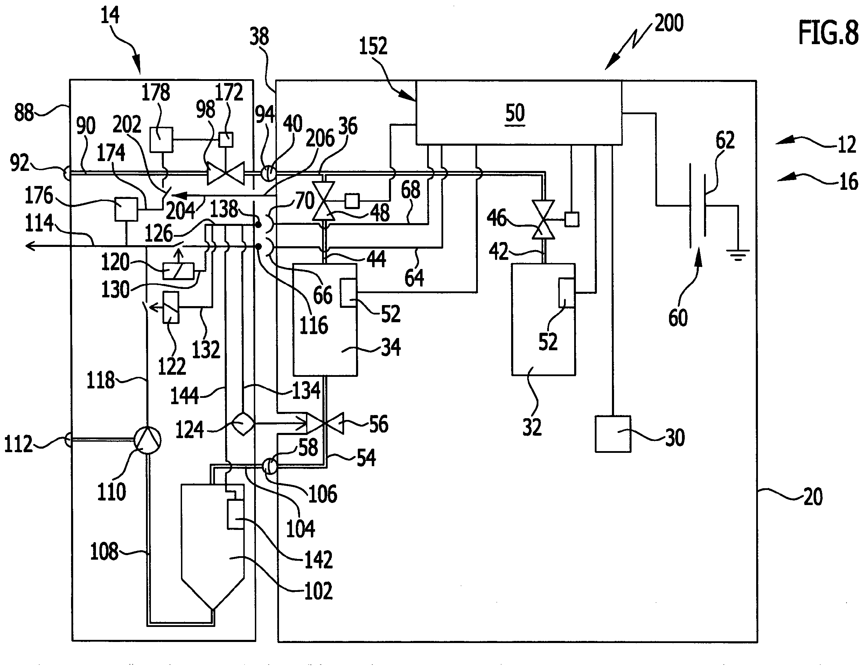

Nachfolgend wird auf weitere bevorzugte Ausführungsformen des erfindungsgemäßen Bodenbehandlungssystems eingegangen, die in den Figuren 6 und 8 in einer der Figur 2 entsprechenden Weise dargestellt wird. Das Bodenbehandlungssystem gemäß Figur 6 trägt das Bezugszeichen 170 und das Bodenbehandlungssystem gemäß Figur 8 das Bezugszeichen 200.

Für gleiche oder gleichwirkende Merkmale und Bauteile der Bodenbehandlungssysteme 10, 170 und 200 werden identische Bezugszeichen benutzt. Die mit dem Bodenbehandlungssystem 10 erzielbaren Vorteile können mit den Bodenbehandlungssystemen 170 und 200 ebenfalls erzielt werden. Zur Vermeidung von Wiederholungen kann auf die voranstehenden Ausführungen verwiesen werden, und nachfolgend wird nur auf die wesentlichen Unterschiede eingegangen.

Insbesondere entfällt bei den Bodenbehandlungssystemen 170 und 200 der Ventilbetätigungsaktor 100 für das Ventil 98. Stattdessen ist ein Ventilbetätigungselement 172 mit dem Ventil 98 gekoppelt. Das Ventilbetätigungselement 172 ist an eine Energieversorgungsleitung 174 angeschlossen. In die Energieversorgungsleitung 174 ist ein Spannungswandler 176 geschaltet. Die Energieversorgungsleitung 174 zweigt von der Energieversorgungsleitung 114 ab, und durch den Spannungswandler 176 wird deren Netzspannung auf eine Niederspannung von beispielsweise ungefähr 24 V oder 12 V herabgesetzt. Weiter ist in die Energieversorgungsleitung 174 ein Zeitglied 178 geschaltet.

Bei dem Bodenbehandlungssystem 170 umfasst die Energieversorgungsleitung 174 zwei Leitungsabschnitte 180, 182 in der Andockstation 14 mit Kontaktelementen 184, die vorzugsweise im Steuerleitungs-Anschlusselement 138 aufgenommen sind. Die Vorrichtung 16 weist eine den Leitungsabschnitten 180, 182 zugeordnete Kontaktbrücke 186 auf, die vorzugsweise im Steuerleitungs-Anschlusselement 70 aufgenommen ist. Deren Kontaktelemente 188 können bei angedockter Vorrichtung 16 mit den Kontaktelementen 184 elektrisch koppeln, so dass durch die Leitungsabschnitte 180, 182 und die Kontaktbrücke 186 dem Ventilbetätigungselement 172 elektrische Energie zugeführt werden kann. Figur 7 zeigt dies schematisch, wobei ergänzend und beispielhaft auch noch die Steuerleitungen 72, 73, 128 und 130 gezeigt sind. Auch hier kann eine etwaige jeweilige Rückleitung, in der Zeichnung nicht dargestellt, vorhanden sein.

Bei angedockter Vorrichtung 16 wird die Zufuhrleitung 90 über das Ventil 98 freigegeben. Im Zeitglied 178 kann eingestellt werden, mit welcher Zeitverzögerung dies erfolgt. Dadurch kann sichergestellt werden, dass die Anschlusselemente 40, 94 zunächst eine fluiddichte Verbindung der Flüssigkeitsleitung 36 mit der Zufuhrleitung 90 gebildet haben, und Austritt von Flüssigkeit zwischen den Anschlusselementen 40, 94 kann vermieden werden.

Nach dem Befüllen des Vorratsbehälters 32 und/oder des Schmutzflüssigkeitsbehälters 34 kann die Vorrichtung 16 abdocken. Ein Austritt von Flüssigkeit kann zum Beispiel durch an den Anschlusselementen 40, 94 angeordnete selbstschließende Ventile vermieden werden. Im Übrigen können derartige selbstschließende Ventile auch bei dem Bodenbehandlungssystem 10 vorgesehen sein sowie an den Anschlusselementen 58, 106.

Beim Bodenbehandlungssystem 200 ist anstelle der Leitungsabschnitte 180, 182 und der Kontaktbrücke 186 ein elektrisches Schaltelement 202 vorgesehen, das in die Energieversorgungsleitung 174 geschaltet ist. Die Vorrichtung 16 weist ein Kontaktelement 204 auf, das beispielsweise als Stößel 206 ausgestaltet und an der Vorderseite 38 angeordnet ist.

Bei angedockter Vorrichtung 16 kann der Stößel 206 das Schaltelement 202 mechanisch kontaktieren, um eine elektrische Verbindung in der Energieversorgungsleitung 174 zum Ventilbetätigungselement 172 freizugeben. Beim Abdocken der Vorrichtung 16 entfällt der Kontakt des Stößels 206 mit dem Schaltelement 202, und die Energieversorgung ist gesperrt.

Die Bodenbehandlungssysteme 170 und 200 weisen den besonderen Vorteil auf, dass deren Andockstation 14 mit herkömmlichen Bodenbehandlungs- und insbesondere Bodenreinigungsvorrichtungen zum Einsatz kommen können, die keine Steuereinrichtung 50 aufweisen (in der Zeichnung nicht gezeigt) oder die nicht zum Ansteuern der Aktoren der Andockstation 14 ausgestaltet sind. Hierzu zählen zum Beispiel handgeführte Vorrichtungen, bei denen dennoch der Wunsch besteht, einen Vorratsbehälter 32 zu befüllen oder einen Schmutzflüssigkeitsbehälter 34 zu spülen. Dies ist dann mit der Andockstation 14 der Bodenbehandlungssysteme 170 und 200 ebenfalls möglich, weil die Betätigung des Ventils 98 allein durch die Anwesenheit der Vorrichtung 16 in der Andockstellung möglich ist.

### Bezugszeichen

- 10: Bodenbehandlungssystem
- 12: Bodenbehandlungsvorrichtung
- 14: Andockstation
- 16: Bodenreinigungsvorrichtung (Vorrichtung)
- 18: Bodenfläche
- 20: Gehäuse
- 22: Fahrwerk
- 24: Reinigungsaggregat
- 26: Schmutzaufnahmevorrichtung
- 28: Saugleiste
- 30: Saugaggregat
- 32: Vorratsbehälter
- 34: Schmutzflüssigkeitsbehälter
- 36: Flüssigkeitsleitung
- 38: Vorderseite
- 40: Anschlusselement
- 42: erster Leitungsabschnitt
- 44: zweiter Leitungsabschnitt
- 46: Ventil
- 48: Ventil
- 50: Steuereinrichtung
- 52: Füllstandssensor
- 54: Auslassleitung
- 56: Ventil
- 58: Anschlusselement
- 60: Energiespeichereinrichtung
- 62: Batterie
- 64: Energieversorgungsleitung
- 66: Energieversorgungs-Anschlusselement
- 68: Steuerleitungen
- 70: Steuerleitungs-Anschlusselement
- 72: Steuerleitung
- 73: Steuerleitung
- 74: Steuerleitung
- 76: Steuerleitung
- 78: Kontaktelement
- 80: Rückleitung
- 82: Anschlusseinheit
- 84: Gehäuse
- 86: Handhabe
- 88: Gehäuse
- 90: Zufuhrleitung
- 92: Anschlusselement
- 94: Anschlusselement
- 98: Ventil
- 100: Ventilbetätigungsaktor
- 102: Auffangbehälter
- 104: Zufuhrleitung
- 106: Anschlusselement
- 108: Entsorgungsleitung
- 110: Pumpaggregat
- 112: Anschlusselement
- 114: Energieversorgungsleitung
- 116: Energieversorgungs-Anschlusselement
- 118: Energieversorgungsleitung
- 120: Schaltaktor
- 122: Schaltaktor
- 124: Ventilbetätigungsaktor
- 126: Steuerleitungen
- 128: Steuerleitung
- 130: Steuerleitung
- 132: Steuerleitung
- 134: Steuerleitung
- 136: Kontaktelement
- 138: Steuerleitungs-Anschlusselement
- 140: Rückleitung
- 142: Füllstandssensor
- 144: Signalleitung
- 146: Anschlusseinheit
- 148: Stirnseite
- 150: Gehäuse
- 152: Detektionseinrichtung
- 154: Detektionsleitung
- 156: Detektionsleitung
- 158: Kontaktbrücke
- 170: Bodenbehandlungssystem
- 172: Ventilbetätigungselement
- 174: Energieversorgungsleitung
- 176: Spannungswandler
- 178: Zeitglied
- 180: Leitungsabschnitt
- 182: Leitungsabschnitt
- 184: Kontaktelement
- 186: Kontaktbrücke
- 188: Kontaktelement
- 200: Bodenbehandlungssystem
- 202: Schaltelement
- 204: Kontaktelement
- 206: Stößel

## Patentansprüche

1. Bodenbehandlungssystem, umfassend eine mobile Bodenbehandlungsvorrichtung (12) und eine Andockstation (14) für diese, wobei die Bodenbehandlungsvorrichtung (12) eine Steuereinrichtung (50), mindestens eine mit dieser gekoppelte Steuerleitung (68) und eine elektrische Energiespeichereinrichtung (60) zur Energieversorgung der Bodenbehandlungsvorrichtung (12) umfasst und die Andockstation (14) eine Steuerleitung (126) umfasst, wobei das Bodenbehandlungssystem (10; 170; 200) eine Detektionseinrichtung (152) umfasst zur Feststellung, ob die Bodenbehandlungsvorrichtung (12) eine Andockstellung einnimmt, wobei die Steuerleitungen (68, 126) in der Andockstellung der Bodenbehandlungsvorrichtung (12) an der Andockstation (14) über Steuerleitungs-Anschlusselemente (70, 138) kontaktbehaftet miteinander koppeln, **dadurch gekennzeichnet, dass** die Andockstation (14) mindestens einen Aktor (100, 120, 122, 124) umfasst, wobei die Steuerleitung (126) der Andockstation (14) mit dem mindestens einen Aktor (100, 120, 122, 124) gekoppelt ist, und dass bei positiver Feststellung über die Einnahme der Andockstellung durch die Bodenbehandlungsvorrichtung (12) der mindestens eine Aktor (100, 120, 122, 124) von der Steuereinrichtung (50) über die Steuerleitungen (68, 126) betätigbar oder ansteuerbar ist.

2. Bodenbehandlungssystem nach Anspruch 1, **dadurch gekennzeichnet, dass** die Energiespeichereinrichtung (60) mindestens eine wiederaufladbare Batterie (62) umfasst, vorzugsweise dass die Bodenbehandlungsvorrichtung (12) eine Energieversorgungsleitung (64) umfasst und die Andockstation (14) eine Energieversorgungsleitung (114) umfasst, wobei die Energieversorgungsleitungen (64, 114) in der Andockstellung der Bodenbehandlungsvorrichtung (12) über Energieversorgungs-Anschlusselemente (66, 116) kontaktbehaftet miteinander koppeln, und wobei der mindestens eine Aktor (120) einen elektrischen Schaltaktor (120) umfasst oder bildet, mit dem die Energieversorgungsleitung (114) der Andockstation (14) von der Steuereinrichtung (50) freigebbar ist, um die mindestens eine Batterie (62) zum Laden mit elektrischer Energie zu beaufschlagen.

3. Bodenbehandlungssystem nach Anspruch 2, **dadurch gekennzeichnet, dass** zumindest eines der Folgenden gilt:
- die Energieversorgungs-Anschlusselemente (66, 116) sind getrennt von den Steuerleitungs-Anschlusselementen (70, 138) gebildet;
- der Schaltaktor (120) ist von der Steuereinrichtung (50) zum Sperren der Energieversorgungsleitung (114) der Andockstation (14) ansteuerbar;
- die Energieversorgungsleitungen (64, 114) und die Energieversorgungs-Anschlusselemente (66, 116) sind für eine Netzspannungsversorgung ausgelegt, insbesondere ca. 230 V oder ca. 120 V Wechselspannung.

4. Bodenbehandlungssystem nach Anspruch 3, **dadurch gekennzeichnet, dass** die Energieversorgungs-Anschlusselemente (66, 116) und die Steuerleitungs-Anschlusselemente (70, 138) räumlich getrennt und im Abstand voneinander an der Bodenbehandlungsvorrichtung (12) und an der Andockstation (14) angeordnet sind, und/oder dass die Bodenbehandlungsvorrichtung (12) und/oder die Andockstation (14) eine Anschlusseinheit (82, 146) umfassen, in der ein jeweiliges Energieversorgungs-Anschlusselement (66, 116) und ein jeweiliges Steuerleitungs-Anschlusselement (70, 138) aufgenommen ist.

5. Bodenbehandlungssystem nach einem der voranstehenden Ansprüche, **dadurch gekennzeichnet, dass** zumindest eines der Folgenden gilt:
- die Steuerleitungen (68, 126) und die Steuerleitungs-Anschlusselemente (70, 138) sind für eine Kleinspannung ausgelegt, insbesondere ca. 24 V oder ca. 12 V Gleichspannung;
- der mindestens eine Aktor (100, 120, 122, 124) ist durch Vorsehen einer elektrischen Potenzialdifferenz und/oder durch Übertragen eines Steuersignals betätigbar oder ansteuerbar;
- zur Feststellung, ob die Bodenbehandlungsvorrichtung (12) die Andockstellung einnimmt, ist von der Detektionseinrichtung (152) ermittelbar, ob die Bodenbehandlungsvorrichtung (12) und die Andockstation (14) in elektrisch leitendem Kontakt stehen.

6. Bodenbehandlungssystem nach einem der voranstehenden Ansprüche, **dadurch gekennzeichnet, dass** die Andockstation (14) eine Mehrzahl von Aktoren (100, 120, 122, 124) umfasst und dass die Bodenbehandlungsvorrichtung (12) und die Andockstation (14) jeweils eine Mehrzahl von Steuerleitungen (68, 126) aufweisen, wobei ein jeweiliger Aktor (100, 120, 122, 124) über eine Steuerleitung (68) der Bodenbehandlungsvorrichtung (12) und eine Steuerleitung (126) der Andockstation (14) ansteuerbar ist, und dass ein jeweiliges gemeinsames Steuerleitungs-Anschlusselement (70, 138) an der Bodenbehandlungsvorrichtung (12) und der Andockstation (14) für die jeweiligen Steuerleitungen (68, 126) vorgesehen ist.

7. Bodenbehandlungssystem nach einem der voranstehenden Ansprüche, **dadurch gekennzeichnet, dass** die Bodenbehandlungsvorrichtung (12) eine mit der Steuereinrichtung (50) gekoppelte Rückleitung (80) umfasst und dass die Andockstation (14) mindestens eine Rückleitung (140) umfasst, zwischen welche und die mindestens eine Steuerleitung (126) der Andockstation (14) der mindestens eine Aktor (100, 120, 122, 124) geschaltet ist, wobei die Rückleitungen (80, 140) in der Andockstellung der Bodenbehandlungsvorrichtung (12) über Anschlusselemente (70, 138) miteinander koppeln und über die Steuerleitungen (68, 126) und die Rückleitungen (80, 140) ein Steuerstromkreis gebildet ist, vorzugsweise dass die Rückleitungen (80, 140) der Bodenbehandlungsvorrichtung (12) und der Andockstation (14) über das jeweilige Steuerleitungs-Anschlusselement (70, 138) der Bodenbehandlungsvorrichtung (12) und der Andockstation (14) miteinander koppeln.

8. Bodenbehandlungssystem nach Anspruch 7 in Verbindung mit Anspruch 6, **dadurch gekennzeichnet, dass** die Bodenbehandlungsvorrichtung (12) und die Andockstation (14) jeweils eine gemeinsame Rückleitung (80, 140) umfassen, wobei die Rückleitung (80) der Bodenbehandlungsvorrichtung (12) mit der Steuereinrichtung (50) gekoppelt ist und ein jeweiliger Aktor (100, 120, 122, 124) zwischen die Rückleitung (140) der Andockstation (14) und deren jeweilige Steuerleitung (126) geschaltet ist.

9. Bodenbehandlungssystem nach einem der voranstehenden Ansprüche, **dadurch gekennzeichnet, dass** die Detektionseinrichtung (152) die Steuereinrichtung (50) umfasst und mit dieser gekoppelte Detektionsleitungen (154, 156) in der Bodenbehandlungsvorrichtung (12), die in deren Andockstellung über eine Kontaktbrücke (158) an der Andockstation (14) elektrisch leitend miteinander verbunden sind, wobei vorzugsweise zumindest eines der Folgenden gilt:
- die Detektionsleitungen (154, 156) koppeln mit der Kontaktbrücke (158) über die Steuerleitungs-Anschlusselemente (70, 138) der Bodenbehandlungsvorrichtung (12) und der Andockstation (14) miteinander;
- in die Kontaktbrücke (158) ist mindestens ein Aktor (120, 122) der Andockstation (14) geschaltet.

10. Bodenbehandlungssystem nach einem der voranstehenden Ansprüche, **dadurch gekennzeichnet, dass** die Detektionseinrichtung (152) die Steuereinrichtung (50) umfasst, von der eine elektrisch leitende Verbindung über eine jeweilige Steuerleitung (68, 126) der Bodenbehandlungsvorrichtung (12) und der Andockstation (14), mindestens einen Aktor (120, 122) und eine jeweilige Rückleitung (80, 140) der Bodenbehandlungsvorrichtung (12) und der Andockstation (14) hindurch detektierbar ist, welche Rückleitungen (80, 140) in der Andockstellung miteinander koppeln, vorzugsweise dass von der Steuereinrichtung (50) elektrisch leitende Verbindungen über jeweilige Steuerleitungen (68, 126) der Bodenbehandlungsvorrichtung (12) und der Andockstation (14) durch zwei oder mehr Aktoren (120, 122) detektierbar sind.

11. Bodenbehandlungssystem nach einem der voranstehenden Ansprüche, **dadurch gekennzeichnet, dass** der mindestens eine Aktor (120, 122) einen elektrischen Schaltaktor (120, 122) umfasst oder bildet, insbesondere ein Relais, zum wahlweisen Freigeben oder Sperren einer Energieversorgungsleitung (114, 118) der Andockstation (14), vorzugsweise dass die Andockstation (14) ein über die Energieversorgungsleitung (118) beaufschlagbares Pumpaggregat (110) umfasst, über das Flüssigkeit in einer Fluidleitung der Andockstation (14) förderbar ist.

12. Bodenbehandlungssystem nach einem der voranstehenden Ansprüche, **dadurch gekennzeichnet, dass** die Andockstation (14) eine Zufuhrleitung (90) umfasst, über die der Bodenbehandlungsvorrichtung (12) eine Flüssigkeit zuführbar ist und in die ein Ventil (98) geschaltet ist, vorzugsweise dass die Zufuhrleitung (90) in der Andockstellung der Bodenbehandlungsvorrichtung (12) mit einer Flüssigkeitsleitung (36) der Bodenbehandlungsvorrichtung (12) über jeweilige Anschlusselemente (40, 94) fluidwirksam verbunden ist.

13. Bodenbehandlungssystem nach Anspruch 12, **dadurch gekennzeichnet, dass** der mindestens eine Aktor (100) einen Ventilbetätigungsaktor (100) umfasst oder bildet, über den das Ventil (98) zum wahlweisen Freigeben oder Sperren der Zufuhrleitung (90) betätigbar ist, oder dass mit dem Ventil (98) ein Ventilbetätigungselement (172) gekoppelt ist, das von einer Energieversorgungsleitung (174) des Bodenbehandlungssystems (170; 200) mit elektrischer Energie beaufschlagbar ist.

14. Bodenbehandlungssystem nach Anspruch 13, **dadurch gekennzeichnet, dass** zumindest eines der Folgenden gilt:
- die Bodenbehandlungsvorrichtung (12) weist ein Kontaktelement (204) auf, das in der Andockstellung ein in die Energieversorgungsleitung (174) geschaltetes elektrisches Schaltelement (202) mechanisch kontaktiert und betätigt, wodurch das Ventilbetätigungselement (172) über die Energieversorgungsleitung (174) mit elektrischer Energie beaufschlagt ist;
- die Energieversorgungsleitung (174) umfasst einen ersten Leitungsabschnitt (180) und einen zweiten Leitungsabschnitt (182) in der Andockstation (14), die in der Andockstellung der Bodenbehandlungsvorrichtung (12) über eine Kontaktbrücke (186) an derselben elektrisch leitend miteinander verbunden sind, wobei die Leitungsabschnitte (180, 182) insbesondere mit der Kontaktbrücke (186) über die Steuerleitungs-Anschlusselemente (70, 138) der Andockstation (14) und der Bodenbehandlungsvorrichtung (12) miteinander koppeln;
- in die Energieversorgungsleitung (174) ist ein Spannungswandler (176) geschaltet zum Wandeln einer Netzspannung eines Energieversorgungsnetzes eingangsseitig in eine am Ventilbetätigungselement (172) anliegende Kleinspannung;
- in die Energieversorgungsleitung (174) ist ein Zeitglied (178) geschaltet, über das die Beaufschlagung des Ventilbetätigungselementes (172) mit elektrischer Energie mit Zeitverzögerung nach Betätigen eines in die Energieversorgungsleitung (174) geschalteten Schaltelementes (202) oder nach leitender Verbindung der Leitungsabschnitte (180, 182) über eine Kontaktbrücke (186) an der Bodenbehandlungsvorrichtung (12) erfolgt.

15. Bodenbehandlungssystem nach einem der voranstehenden Ansprüche, **dadurch gekennzeichnet, dass** die Bodenbehandlungsvorrichtung (12) einen Flüssigkeitsbehälter (32, 34) aufweist und eine daran angeschlossene Auslassleitung (54), in die ein Ventil (56) geschaltet ist, und dass mindestens ein Aktor (124) einen elektrischen Ventilbetätigungsaktor (124) oder Antriebsaktor für das Ventil (56) umfasst oder bildet, über den das Ventil (56) zum wahlweisen Freigeben oder Sperren der Auslassleitung (54) betätigbar ist.

16. Bodenbehandlungssystem nach einem der voranstehenden Ansprüche, **dadurch gekennzeichnet, dass** mindestens ein Aktor (100, 120, 122, 124) von der Steuereinrichtung (50) abhängig von mindestens einem ihr zugeführten Eingangssignal ansteuerbar ist, vorzugsweise dass das mindestens eine Eingangssignal zumindest eines der Folgenden ist oder umfasst:
- ein Füllstandssignal eines Füllstandssensors (52, 142), der einem Flüssigkeitsbehälter (32, 34, 102) der Bodenbehandlungsvorrichtung (12) oder der Andockstation (14) zugeordnet ist, wobei der mindestens eine Aktor (124) ein(en) Ventilbetätigungsaktor (100, 124) umfasst oder ausbildet zum wahlweisen Freigeben oder Sperren einer Fluidleitung der Andockstation (14) oder der Bodenbehandlungsvorrichtung (12);
- ein Ladezustandssignal einer wiederaufladbaren Batterie (62) der Bodenbehandlungsvorrichtung (12), wobei der mindestens eine Aktor (120) einen elektrischen Schaltaktor (120) umfasst oder ausbildet zum wahlweisen Freigeben oder Sperren einer Energieversorgungsleitung (114) der Andockstation (14).

17. Bodenbehandlungssystem nach einem der voranstehenden Ansprüche, **dadurch gekennzeichnet, dass** zumindest eines der Folgenden gilt:
- die Bodenbehandlungsvorrichtung (12) ist selbstfahrend und selbstlenkend;
- die Bodenbehandlungsvorrichtung (12) ist handgeführt;
- die Bodenbehandlungsvorrichtung (12) weist eine Bodenreinigungsvorrichtung (16) und mindestens ein Reinigungsaggregat (24) zum Reinigen einer Bodenfläche (18) auf.

18. Verfahren zum Betreiben eines Bodenbehandlungssystems, das eine mobile Bodenbehandlungsvorrichtung (12) und eine Andockstation (14) für diese umfasst, bei welchem Verfahren in einer Andockstellung der Bodenbehandlungsvorrichtung (12) Anschlusselemente (70, 138) der Bodenbehandlungsvorrichtung (12) und der Andockstation (14) kontaktbehaftet miteinander koppeln und eine elektrische Verbindung zwischen einer Steuereinrichtung (50) der Bodenbehandlungsvorrichtung (12) und mindestens einem in der Andockstation (14) angeordneten Aktor (100, 120, 122, 124) über jeweilige Steuerleitungen (68, 126) der Bodenbehandlungsvorrichtung (12) und der Andockstation (14) gebildet ist, wobei festgestellt wird, dass die Bodenbehandlungsvorrichtung (12) die Andockstellung einnimmt und bei positiver Feststellung der mindestens eine Aktor (100, 120, 122, 124) von der Steuereinrichtung (50) über die Steuerleitungen (68, 126) angesteuert oder betätigt wird.

## Claims

1. A floor treatment system, comprising a mobile floor treatment apparatus (12) and a docking station (14) therefor, wherein the floor treatment apparatus (12) comprises a control device (50), at least one control line (68) coupled thereto, and an electrical energy storage device (60) for supplying energy to the floor treatment apparatus (12), and the docking station (14) comprises one control line (126), wherein the floor treatment system (10; 170; 200) comprises a detection device (152) for determining whether the floor treatment apparatus (12) is in a docked position, wherein, when the floor treatment apparatus (12) is in the docked position on the docking station (14), the control lines (68, 126) are coupled to one another in contact-based manner by way of control line connection elements (70, 138), **characterized in that** the docking station (14) comprises at least one actuator (100, 120, 122, 124), wherein the control line (126) of the docking station (14) is coupled to the at least one actuator (100, 120, 122, 124) and **in that** if it is determined positively that the floor treatment apparatus (12) is in the docked position, the at least one actuator (100, 120, 122, 124) of the control device (50) is actuatable or controllable by way of the control lines (68, 126).

2. A floor treatment system in accordance with claim 1, **characterized in that** the energy storage device (60) comprises at least one rechargeable battery (62), preferably **in that** the floor treatment apparatus (12) comprises an energy supply line (64) and the docking station (14) comprises an energy supply line (114), wherein, when the floor treatment apparatus (12) is in the docked position, the energy supply lines (64, 114) are coupled to one another in contact-based manner by way of energy supply connection elements (66, 116), and wherein the at least one actuator (120) comprises or forms an electrical switch actuator (120) by which the energy supply line (114) of the docking station (14) is activatable by the control device (50) in order to apply electrical energy to the at least one battery (62) for charging.

3. A floor treatment system in accordance with claim 2, **characterized in that** at least one of the following applies:
- the energy supply connection elements (66, 116) are formed separately from the control line connection elements (70, 138);
- the switch actuator (120) is controllable by the control device (50) for deactivating the energy supply line (114) of the docking station (14);
- the energy supply lines (64, 114) and the energy supply connection elements (66, 116) are designed for a mains voltage supply, in particular AC voltage of approximately 230 V or approximately 120 V.

4. A floor treatment system in accordance with claim 3, **characterized in that** the energy supply connection elements (66, 116) and the control line connection elements (70, 138) are spatially separated, and are arranged spaced from one another on the floor treatment apparatus (12) and the docking station (14), and/or **in that** the floor treatment apparatus (12) and/or the docking station (14) comprise a connection unit (82, 146) that receives a respective energy supply connection element (66, 116) and a respective control line connection element (70, 138).

5. A floor treatment system in accordance with any one of the preceding claims, **characterized in that** at least one of the following applies:
- the control lines (68, 126) and the control line connection elements (70, 138) are designed for a low voltage, in particular DC voltage of approximately 24 V or approximately 12 V;
- the at least one actuator (100, 120, 122, 124) is actuatable or controllable by the provision of an electrical potential difference and/or by the transmission of a control signal;
- for determining whether the floor treatment apparatus (12) is in the docked position, the detection device (152) is configured to determine whether the floor treatment apparatus (12) and the docking station (14) are in electrically conductive contact.

6. A floor treatment system in accordance with any one of the preceding claims, **characterized in that** the docking station (14) comprises a plurality of actuators (100, 120, 122, 124), and **in that** the floor treatment apparatus (12) and the docking station (14) each have a plurality of control lines (68, 126), wherein a respective actuator (100, 120, 122, 124) is controllable by way of a control line (68) of the floor treatment apparatus (12) and a control line (126) of the docking station (14), and **in that** a respective common control line connection element (70, 138) is provided on the floor treatment apparatus (12) and the docking station (14) for the respective control lines (68, 126).

7. A floor treatment system in accordance with any one of the preceding claims, **characterized in that** the floor treatment apparatus (12) comprises a return line (80) that is coupled to the control device (50), and **in that** the docking station (14) comprises at least one return line (140), and between this and the at least one control line (126) of the docking station (14) there is connected the at least one actuator (100, 120, 122, 124), wherein, when the floor treatment apparatus (12) is in the docked position, the return lines (80, 140) are coupled to one another by way of connection elements (70, 138), and a control circuit is formed by way of the control lines (68, 126) and the return lines (80, 140), preferably **in that** the return lines (80, 140) of the floor treatment apparatus (12) and the docking station (14) are coupled to one another by way of the respective control line connection element (70, 138) of the floor treatment apparatus (12) and the docking station (14).

8. A floor treatment system in accordance with claim 7 in conjunction with claim 6, **characterized in that** the floor treatment apparatus (12) and the docking station (14) each comprise a common return line (80, 140), wherein the return line (80) of the floor treatment apparatus (12) is coupled to the control device (50) and a respective actuator (100, 120, 122, 124) is connected between the return line (140) of the docking station (14) and the respective control line (126) thereof.

9. A floor treatment system in accordance with any one of the preceding claims, **characterized in that** the detection device (152) comprises the control device (50) and detection lines (154, 156) in the floor treatment apparatus (12) coupled thereto, which are electrically conductively connected to one another in the docked position of the floor treatment apparatus (12) by way of a contact bridge (158) at the docking station (14), wherein preferably one of the following applies:
- the detection lines (154, 156) are coupled to one another with the contact bridge (158) by way of the control line connection elements (70, 138) of the floor treatment apparatus (12) and the docking station (14);
- at least one actuator (120, 122) of the docking station (14) is connected into the contact bridge (158).

10. A floor treatment system in accordance with any one of the preceding claims, **characterized in that** the detection device (152) comprises the control device (50) by which an electrically conductive connection through a respective control line (68, 126) of the floor treatment apparatus (12) and of the docking station (14), at least one actuator (120, 122) and a respective return line (80, 140) of the floor treatment apparatus (12) and of the docking station (14) is detectable, wherein these return lines (80, 140) are coupled to one another in the docked position, preferably **in that** by means of the control device (50) electrically conductive connections via respective control lines (68, 126) of the floor treatment apparatus (12) and the docking station (14) through two or more actuators (120, 122) are detectable.

11. A floor treatment system in accordance with any one of the preceding claims, **characterized in that** the at least one actuator (120, 122) comprises or forms an electrical switch actuator (120, 122), in particular a relay, for selectively activating or deactivating an energy supply line (114, 118) of the docking station (14), preferably **in that** the docking station (14) comprises a pumping unit (110) that is configured to be acted upon by the energy supply line (118) and by way of which liquid is conveyable in a fluid conduit of the docking station (14).

12. A floor treatment system in accordance with any one of the preceding claims, **characterized in that** the docking station (14) comprises a supply conduit (90) through which a liquid is suppliable to the floor treatment apparatus (12) and into which there is connected a valve (98), preferably in that when the floor treatment apparatus (12) is in the docked position, the supply conduit (90) is in fluidic connection with a liquid conduit (36) of the floor treatment apparatus (12) by way of respective connection elements (40, 94).

13. A floor treatment system in accordance with claim 12, **characterized in that** the at least one actuator (100) comprises or forms a valve actuator (100) by way of which the valve (98) for selectively unblocking or blocking the supply conduit (90) is actuatable or **in that** a valve actuation element (172), to which electrical energy is applicable by an energy supply line (174) of the floor treatment system (170; 200), is coupled to the valve (98).

14. A floor treatment system in accordance with claim 13, **characterized in that** at least one of the following applies:
- the floor treatment apparatus (12) has a contact element (204) that, in the docked position, makes mechanical contact with, and actuates, an electrical switching element (202) that is connected into the energy supply line (174), as a result of which electrical energy is applied to the valve actuation element (172) by way of the energy supply line (174);
- the energy supply line (174) comprises a first line portion (180) and a second line portion (182) in the docking station (14) which, when the floor treatment apparatus (12) is in the docked position, are electrically conductively connected to one another by way of a contact bridge (186) on the floor treatment apparatus (12), wherein the line portions (180, 182) are coupled to one another by way of the control line connection elements (70, 138) of the docking station (14) and the floor treatment apparatus (12) in particular by way of the contact bridge (186);
- a voltage converter (176) is connected into the energy supply line (174) for converting a mains voltage from a power supply network on the input side into a low voltage applied across the valve actuation element (172);
- there is connected into the energy supply line (174) a timing member (178) by way of which electrical energy is applied to the valve actuation element (172) with a delay after actuation of a switching element (202) that is connected into the energy supply line (174) or after a conductive connection is made between the line portions (180, 182) by way of a contact bridge (186) on the floor treatment apparatus (12).

15. A floor treatment system in accordance with any one of the preceding claims, **characterized in that** the floor treatment apparatus (12) has a liquid container (32, 34) and an outlet conduit (54) that is connected thereto and into which a valve (56) is connected, and **in that** at least one actuator (124) comprises or forms an electrical valve actuator (124) or drive actuator for the valve (56), by way of which the valve (56) is actuatable for selectively unblocking or blocking the outlet conduit (54).

16. A floor treatment system in accordance with any one of the preceding claims, **characterized in that** at least one actuator (100, 120, 122, 124) is controllable by the control device (50) in dependence on at least one input signal supplied to the control device (50), preferably that the at least one input signal is or comprises at least one of the following:
- a level signal of a level sensor (52, 142) that is associated with a liquid container (32, 34, 102) of the floor treatment apparatus (12) or the docking station (14), wherein the at least one actuator (124) comprises or forms a valve actuator (100, 124) for selectively unblocking or blocking a fluid conduit (54) of the docking station (14) or of the floor treatment apparatus (12);
- a charge condition signal of a rechargeable battery (62) of the floor treatment apparatus (12), wherein the at least one actuator (120) comprises or forms an electrical switch actuator (120) for selectively activating or deactivating an energy supply line (114) of the docking station (14).

17. A floor treatment system in accordance with any one of the preceding claims, **characterized in that** at least one of the following applies:
- the floor treatment apparatus (12) is self-propelling and self-steering;
- the floor treatment apparatus (12) is guided manually;
- the floor treatment apparatus (12) has a floor cleaning apparatus (16) and at least one cleaning unit (24) for cleaning a floor surface (18).

18. A method for operating a floor treatment system that comprises a mobile floor treatment apparatus (12) and a docking station (14) therefor, in which, when the floor treatment apparatus (12) is in a docked position, connection elements (70, 138) of the floor treatment apparatus (12) and the docking station (14) are coupled to one another in contact-based manner, and an electrical connection is formed between a control device (50) of the floor treatment apparatus (12) and at least one actuator (100, 120, 122, 124) arranged in the docking station (14) by way of respective control lines (68, 126) of the floor treatment apparatus (12) and the docking station (14), the method comprising determining if the floor treatment apparatus (12) is in the docked position, and, if this is determined positively, controlling or actuating the at least one actuator (100, 120, 122, 124) by the control device (50) by way of the control lines (68, 126).

## Revendications

1. Système de traitement des sols, comprenant un dispositif de traitement des sols mobile (12) et une station d'accueil (14) pour celui-ci, où le dispositif de traitement des sols (12) comprend un dispositif de commande (50), au moins une ligne de commande (68) couplée à celui-ci et un dispositif de stockage d'énergie électrique (60) pour fournir de l'énergie au dispositif de traitement des sols (12) et la station d'accueil (14) comprend une ligne de commande (126), où le système de traitement des sols (10; 170; 200) comprend un dispositif de détection (152) pour déterminer si le dispositif de traitement des sols (12) prend une position d'accueil, où les lignes de commande (68, 126) se couplent l'une à l'autre par contact dans la position d'accueil du dispositif de traitement des sols (12) sur la station d'accueil (14) par l'intermédiaire d'éléments de raccordement de ligne de commande (70, 138), **caractérisé en ce que** la station d'accueil (14) comprend au moins un actionneur (100, 120, 122, 124), où la ligne de commande (126) de la station d'accueil (14) est couplée avec au moins un actionneur (100, 120, 122, 124), et **en ce que**, dans le cas d'une détermination positive que le dispositif de traitement des sols (12) a pris la position d'accueil, le au moins un actionneur (100, 120, 122, 124) peut être actionné ou commandé par le dispositif de commande (50), par l'intermédiaire des lignes de commande (68, 126).

2. Système de traitement des sols selon la revendication 1, **caractérisé en ce que** le dispositif de stockage d'énergie (60) comprend au moins une batterie rechargeable (62), de préférence **en ce que** le dispositif de traitement des sols (12) comprend une ligne d'alimentation en énergie (64) et la station d'accueil (14) comprend une ligne d'alimentation en énergie (114), où les lignes d'alimentation en énergie (64, 114) se couplent l'une à l'autre par contact dans la position d'accueil du dispositif de traitement des sols (12) par l'intermédiaire d'éléments de raccordement d'alimentation en énergie (66, 116), et où le au moins un actionneur (120) comprend ou forme un actionneur de commutation électrique (120), avec lequel la ligne d'alimentation en énergie (114) de la station d'accueil (14) peut être libérée par le dispositif de commande (50) pour charger en énergie électrique la au moins une batterie (62) pour la charge.

3. Système de traitement des sols selon la revendication 2, **caractérisé en ce qu'**au moins l'un des suivants s'applique:
- les éléments de raccordement d'alimentation en énergie (66, 116) sont formés séparément des éléments de raccordement de ligne de commande (70, 138);
- l'actionneur de commutation (120) peut être commandé par le dispositif de commande (50) pour bloquer la ligne d'alimentation en énergie (114) de la station d'accueil (14);
- les lignes d'alimentation en énergie (64, 114) et les éléments de raccordement d'alimentation en énergie (66, 116) sont conçus pour une tension secteur, en particulier une tension alternative d'environ 230 V ou d'environ 120 V.

4. Système de traitement des sols selon la revendication 3, **caractérisé en ce que** les éléments de raccordement d'alimentation en énergie (66, 116) et les éléments de raccordement de ligne de commande (70, 138) sont disposés spatialement séparés et à distance entre eux sur le dispositif de traitement des sols (12) et sur la station d'accueil (14), et/ou **en ce que** le dispositif de traitement des sols (12) et/ou la station d'accueil (14) comprennent une unité de raccordement (82, 146) dans laquelle un élément de raccordement d'alimentation en énergie (66, 116) respectif et un élément de raccordement de ligne de commande (70, 138) respectif sont logés.

5. Système de traitement des sols selon l'une des revendications précédentes, **caractérisé en ce qu'**au moins l'un des suivants s'applique:
- les lignes de commande (68, 126) et les éléments de raccordement de ligne de commande (70, 138) sont conçus pour une basse tension, en particulier une tension continue d'environ 24 V ou d'environ 12 V;
- le au moins un actionneur (100, 120, 122, 124) peut être actionné ou commandé en fournissant une différence de potentiel électrique et/ou en transmettant un signal de commande;
- afin d'établir si le dispositif de traitement des sols (12) prend la position d'accueil, le dispositif de détection (152) peut déterminer si le dispositif de traitement des sols (12) et la station d'accueil (14) sont en contact électriquement conducteur.

6. Système de traitement des sols selon l'une des revendications précédentes, **caractérisé en ce que** la station d'accueil (14) comprend une pluralité d'actionneurs (100, 120, 122, 124) et **en ce que** le dispositif de traitement des sols (12) et la station d'accueil (14) comportent chacun une pluralité de lignes de commande (68, 126), où un actionneur (100, 120, 122, 124) respectif peut être commandé par l'intermédiaire d'une ligne de commande (68) du dispositif de traitement des sols (12) et d'une ligne de commande (126) de la station d'accueil (14), et **en ce qu'**un élément de raccordement de ligne de commande (70, 138) commun respectif est prévu sur le dispositif de traitement des sols (12) et la station d'accueil (14) pour les lignes de commande (68, 126) respectives.

7. Système de traitement des sols selon l'une des revendications précédentes, **caractérisé en ce que** le dispositif de traitement des sols (12) comprend une ligne de retour (80) couplée au dispositif de commande (50) et **en ce que** la station d'accueil (14) comprend au moins une ligne de retour (140), entre laquelle et la au moins une ligne de commande (126) de la station d'accueil (14) le au moins un actionneur (100, 120, 122, 124) est connecté, où les lignes de retour (80, 140) se couplent l'une à l'autre dans la position d'accueil du dispositif de traitement des sols (12) par l'intermédiaire d'éléments de raccordement (70, 138) et un circuit de commande est formé par l'intermédiaire des lignes de commande (68, 126) et des lignes de retour (80, 140), de préférence **en ce que** les lignes de retour (80, 140) du dispositif de traitement des sols (12) et de la station d'accueil (14) se couplent l'une à l'autre par l'intermédiaire de l'élément de raccordement de ligne de commande (70, 138) du dispositif de traitement des sols (12) et de la station d'accueil (14) respectif.

8. Système de traitement des sols selon la revendication 7 en liaison avec la revendication 6, **caractérisé en ce que** le dispositif de traitement des sols (12) et la station d'accueil (14) comprennent chacun une ligne de retour commune (80, 140), où la ligne de retour (80) du dispositif de traitement des sols (12) est couplée au dispositif de commande (50) et un actionneur (100, 120, 122, 124) respectif est connecté entre la ligne de retour (140) de la station d'accueil (14) et sa ligne de commande (126) respective.

9. Système de traitement des sols selon l'une des revendications précédentes, **caractérisé en ce que** le dispositif de détection (152) comprend le dispositif de commande (50) et des lignes de détection (154, 156) couplées à celui-ci dans le dispositif de traitement des sols (12) qui, dans sa position d'accueil, sont reliées entre elles de manière électriquement conductrice par l'intermédiaire d'un pont de contact (158) sur la station d'accueil (14), où de préférence au moins l'un des suivants s'applique:
- les lignes de détection (154, 156) se couplent au pont de contact (158) par l'intermédiaire des éléments de raccordement de ligne de commande (70, 138) du dispositif de traitement des sols (12) et de la station d'accueil (14);
- au moins un actionneur (120, 122) de la station d'accueil (14) est connecté dans le pont de contact (158).

10. Système de traitement des sols selon l'une des revendications précédentes, **caractérisé en ce que** le dispositif de détection (152) comprend le dispositif de commande (50), par lequel une liaison électriquement conductrice par l'intermédiaire d'une ligne de commande (68, 126) respective du dispositif de traitement des sols (12) et de la station d'accueil (14), d'au moins un actionneur (120, 122) et d'une ligne de retour (80, 140) respective du dispositif de traitement des sols (12) et de la station d'accueil (14) est détectable, lesquelles lignes de retour (80, 140) se couplent l'une à l'autre dans la position d'accueil, de préférence **en ce que** des liaisons électriquement conductrices par l'intermédiaire de lignes de commande (68, 126) respectives du dispositif de traitement des sols (12) et de la station d'accueil (14) à travers deux ou plusieurs actionneurs (120, 122) peuvent être détectées par le dispositif de commande (50).

11. Système de traitement des sols selon l'une des revendications précédentes, **caractérisé en ce que** le au moins un actionneur (120, 122) comprend ou forme un actionneur de commutation électrique (120, 122), en particulier un relais, pour au choix activer ou bloquer une ligne d'alimentation en énergie (114, 118) de la station d'accueil (14), de préférence **en ce que** la station d'accueil (14) comprend une unité de pompe (110) qui peut être chargée par l'intermédiaire de la ligne d'alimentation en énergie (118), par l'intermédiaire de laquelle un liquide peut être transporté dans une ligne de fluide de la station d'accueil (14).

12. Système de traitement des sols selon l'une des revendications précédentes, **caractérisé en ce que** la station d'accueil (14) comprend une ligne d'apport (90) par l'intermédiaire de laquelle un liquide peut être amené au dispositif de traitement des sols (12) et dans laquelle une vanne (98) est connectée, de préférence **en ce que** la ligne d'apport (90) dans la position d'accueil du dispositif de traitement des sols (12) est reliée de manière fluidique à une ligne de liquide (36) du dispositif de traitement des sols (12) par l'intermédiaire d'éléments de raccordement (40, 94) respectifs.

13. Système de traitement des sols selon la revendication 12, **caractérisé en ce que** le au moins un actionneur (100) comprend ou forme un actionneur d'actionnement de vanne (100) par l'intermédiaire duquel la vanne (98) peut être actionnée pour ouvrir ou fermer au choix la ligne d'apport (90), ou **en ce qu'**à la vanne (98) est couplé un élément d'actionnement de vanne (172) qui peut être chargé en énergie électrique par une ligne d'alimentation en énergie (174) du système de traitement des sols (170; 200).

14. Système de traitement des sols selon la revendication 13, **caractérisé en ce qu'**au moins l'un des suivants s'applique:
- le dispositif de traitement des sols (12) comporte un élément de contact (204) qui, dans la position d'accueil, entre en contact mécaniquement et actionne un élément de commutation électrique (202) connecté dans la ligne d'alimentation en énergie (174), de sorte que l'élément d'actionnement de vanne (172) est chargé en énergie électrique par l'intermédiaire de la ligne d'alimentation en énergie (174);
- la ligne d'alimentation en énergie (174) comprend une première section de ligne (180) et une deuxième section de ligne (182) dans la station d'accueil (14), qui, dans la position d'accueil du dispositif de traitement des sols (12), sont électriquement reliées l'une à l'autre par l'intermédiaire d'un pont de contact (186) sur celui-ci, où les sections de ligne (180, 182) se couplent l'une à l'autre en particulier avec le pont de contact (186) par l'intermédiaire des éléments de raccordement de ligne de commande (70, 138) de la station d'accueil (14) et du dispositif de traitement des sols (12);
- un convertisseur de tension (176) est connecté dans la ligne d'alimentation en énergie (174) pour convertir une tension secteur d'un réseau d'alimentation en énergie côté entrée en une basse tension appliquée à l'élément d'actionnement de vanne (172);
- dans la ligne d'alimentation en énergie (174) est connectée une minuterie (178) par l'intermédiaire de laquelle l'application d'énergie électrique à l'élément d'actionnement de vanne (172) a lieu avec un retard dans le temps après l'actionnement d'un élément de commutation (202) connecté dans la ligne d'alimentation en énergie (174) ou après la liaison conductrice des sections de ligne (180, 182) par l'intermédiaire d'un pont de contact (186) sur le dispositif de traitement des sols (12).

15. Système de traitement des sols selon l'une des revendications précédentes, **caractérisé en ce que** le dispositif de traitement des sols (12) comporte un réservoir de liquide (32, 34) et une ligne de sortie (54) reliée à celui-ci, dans laquelle une vanne (56) est connectée, et **en ce qu'**au moins un actionneur (124) comprend ou forme un actionneur d'actionnement de vanne électrique (124) ou un actionneur d'entraînement pour la vanne (56), par l'intermédiaire duquel la vanne (56) peut être actionnée pour ouvrir ou bloquer au choix la ligne de sortie (54).

16. Système de traitement des sols selon l'une des revendications précédentes, **caractérisé en ce qu'**au moins un actionneur (100, 120, 122, 124) peut être commandé par le dispositif de commande (50) en fonction d'au moins un signal d'entrée qui lui est fourni, de préférence **en ce que** le au moins un signal d'entrée est ou comprend au moins l'un des suivants:
- un signal de niveau d'un capteur de niveau (52, 142) qui est associé à un réservoir de liquide (32, 34, 102) du dispositif de traitement des sols (12) ou de la station d'accueil (14), où le au moins un actionneur (124) comprend ou forme un actionneur d'actionnement de vanne (100, 124) pour libérer ou bloquer au choix une ligne de fluide de la station d'accueil (14) ou du dispositif de traitement des sols (12);
- un signal d'état de charge d'une batterie rechargeable (62) du dispositif de traitement des sols (12), où le au moins un actionneur (120) comprend ou forme un actionneur de commutation électrique (120) pour libérer ou bloquer au choix une ligne d'alimentation en énergie (114) de la station d'accueil (14).

17. Système de traitement des sols selon l'une des revendications précédentes, **caractérisé en ce qu'**au moins l'un des suivants s'applique:
- le dispositif de traitement des sols (12) est automoteur et autoguidé;
- le dispositif de traitement des sols (12) est guidé manuellement;
- le dispositif de traitement des sols (12) comporte un dispositif de nettoyage des sols (16) et au moins une unité de nettoyage (24) pour nettoyer une surface de sol (18).

18. Procédé pour faire fonctionner un système de traitement des sols, qui comprend un dispositif de traitement des sols mobile (12) et une station d'accueil (14) pour celui-ci, procédé dans lequel, dans une position d'accueil du dispositif de traitement des sols (12), des éléments de raccordement (70, 138) du dispositif de traitement des sols (12) et de la station d'accueil (14) se couplent l'un avec l'autre par contact et une liaison électrique entre un dispositif de commande (50) du dispositif de traitement des sols (12) et au moins un actionneur (100, 120, 122, 124) disposé dans la station d'accueil (14) est formée par l'intermédiaire de lignes de commande (68, 126) respectives du dispositif de traitement des sols (12) et de la station d'accueil (14), où il est déterminé que le dispositif de traitement des sols (12) est dans la position d'accueil et, dans le cas d'une détermination positive, le au moins un actionneur (100, 120, 122, 124) est commandé ou actionné par le dispositif de commande (50) par l'intermédiaire des lignes de commande (68, 126).
